# EUROPEAN PATENT APPLICATION

(11) **EP 4 749 456 A1**
(43) Date of publication of application: **27.05.2026**
(21) Application number: 25215928.0
(22) Date of filing: 14.11.2025
(51) Int. Cl.: G06F 9/50

(54) **CORE SELECTOR FOR MULTIPLE CORE COMPUTERS**

(30) Priority: 26.11.2024 US 202463724953 P
(71) Applicant: O.C.E. Technology Ltd., Dublin 4 (IE)
(72) Inventor: Kavanagh, Barry, Bray, Co. Wicklow, A98 AD93 (IE); Khoruzhyy, Oleksandr, Dublin 15, D15 N7F3 (IE); Ryan, Michael, Dublin 9, D09 HC81 (IE)
(74) Representative: Fournier, Kevin

(57) **Abstract**

Disclosed is a method of selecting an optimal central processing unit (CPU) core for a computer system to use to execute a specific software task, where the computer system has a plurality of CPU cores. The method includes steps of: receiving, from an operating system, O/S, of the computer system, a request to select a CPU core from amongst the plurality of CPU cores for use in executing a specific software task; and selecting a CPU core from amongst the plurality of CPU cores for use in executing the specific software task, in response to the request from the O/S, and sending the selected CPU core identity to the O/S; the plurality of CPU cores may concurrently be executing a plurality of software tasks, each having a respective plurality of execution states, the plurality of CPU cores is organized in a dynamic hierarchical tree-based structure which dynamically changes.

## Description

### FIELD

Various embodiments of the disclosure relate to mechanisms for selecting computer cores in multiple-core computer systems. More specifically, various embodiments relate to a core selector module for optimal core selection in multi-core computer systems operating under the control of an operating system.

### BACKGROUND

Modern computer systems may include multiple processing cores, ranging from 2 to thousands, and use them to achieve enhanced computational performance through concurrent or parallel execution of software tasks across different cores. When a software task is to be put into execution on such multi-core systems, the operating system must create an execution instance of the task, a 'job', and select a core to use for this job's execution from the available cores. These cores may already be executing various software tasks, and the operating system may have to preempt one of these cores from its current job to allow a new job to begin. The optimal core to use must satisfy multiple criteria. It must currently have sufficient remaining resources to allow a new job to begin, its selection must cause minimal disruption to the jobs currently in execution, and the selection must result in jobs being distributed across cores to optimize overall system performance. Depending on the system, other factors, such as core power consumption characteristics, may also be taken into account when selecting the optimal core.

Operating systems may utilize core selection mechanisms that were originally designed when core numbers were small, typically no more than four, and subsequently extended for larger core numbers. These mechanisms may determine the optimal core by sequentially examining all available cores when new software requires execution. Such mechanisms have a time complexity proportional to the number of cores, requiring the examination of all N cores in an N-core system to identify the optimal selection. As core counts continue to increase, the time required for optimal core selection by such mechanisms may introduce unacceptable delays in the start of job execution.

Inefficient core selection mechanisms are particularly problematic in real-time operating systems, where software tasks may need to meet strict timing deadlines. In embedded systems that use real-time operating systems, failure to promptly initiate a job may result in missed deadlines with serious consequences. A computer system with a high core count may struggle to achieve optimal core selection while meeting timing requirements.

Further limitations and disadvantages of traditional approaches will become apparent to one skilled in the art through comparison with aspects of the present disclosure as set forth in the remainder of the present application regarding the drawings.

### SUMMARY

A method is disclosed, as claimed in claim 1, for selecting a central processing unit core for a computer system to use to execute a specific software task, where the computer system has multiple CPU cores. A corresponding system, as claimed, upon which the method may be carried out is described, and the detailed design of the method and its interactions with the computer system are disclosed. Additionally, a computer program, as claimed, stored on a computer-readable storage medium contains instructions for, when executed on a computer system, carrying out the method.

The method includes receiving, from an operating system of the computer system, a request to select a CPU core for executing a specific software task. The operating system coordinates task execution across computational resources and initiates core selection when software tasks require processing resources. The request may include information identifying the software task and its execution requirements, enabling the selection mechanism to evaluate core suitability based on task characteristics. This receiving step establishes communication between the operating system and the core selection mechanism, allowing the operating system to delegate core assignment decisions while retaining control over task management and execution flow.

The method selects a CPU core from among the CPU cores for the execution of a specific software task in response to a request from the operating system and sends the identity of the selected CPU core to the operating system. Upon identifying a suitable core, the system returns the core identifier to the operating system, which may then direct task execution to the specified core. This response mechanism provides rapid core assignment without requiring the operating system to implement complex selection logic or maintain detailed state information about individual cores.

The method organizes CPU cores that concurrently execute software tasks, each with its own execution state. Modern multi-core processors support the simultaneous execution of different software tasks on different cores, with each task progressing through various execution states, including ready, running, waiting, and suspended. The execution state of a task reflects its current position in the execution lifecycle and determines whether the core executing it may be preempted to run another task. The method tracks execution states across all cores as tasks begin and end execution, facilitating informed selection decisions based on current core utilization and task execution status.

The method organizes the CPU cores in a dynamic, hierarchical tree-based structure that changes as the execution states of the software tasks executing on the CPU cores change. This ensures that at any given time, a currently optimal core is located at a predetermined position within the tree-based structure. The tree-based organization maintains cores in a hierarchical arrangement where positional relationships reflect relative suitability for task assignment. As tasks begin execution, complete execution, or change execution states, the tree structure undergoes reorganization to maintain an accurate representation of core availability and suitability. This dynamic reorganization ensures that core selection may be performed by examining a specific position in the tree rather than sequentially evaluating all cores, thereby reducing selection time complexity. The tree structure automatically adapts to changing system conditions as tasks begin and end execution, maintaining selection accuracy as system load fluctuates.

The method may select the CPU core by taking into account the current state of the dynamic hierarchical tree-based structure, selecting the CPU core that is located at the predetermined position of the tree-based structure, and sending the identity of the selected CPU core, which is located at the predetermined position, to the operating system. The selection mechanism accesses the tree structure and identifies the core at the predetermined position, which represents the currently optimal core for task assignment based on the current system state. By selecting the core at the predetermined position, the system avoids exhaustive search through all cores, achieving rapid core identification. The identified core is then communicated to the operating system for task execution, completing the selection process. This approach provides a deterministic selection time regardless of the total number of cores in the system, making it particularly suitable for systems with large core counts.

The predetermined position of the tree-based structure may be at its head. The head position represents the root node of the hierarchical tree, and may serve as the entry point for tree traversal operations. Maintaining the optimal core at the head position enables immediate identification without tree traversal, minimizing selection latency. The head position provides a consistent reference point for core selection operations, simplifying the selection algorithm and reducing computational overhead. Tree reorganization operations maintain the property that the most suitable core resides at the head position when there are no core affinity restrictions, ensuring selection accuracy across dynamic system conditions.

The hierarchical tree-based structure may organize the CPU cores according to a core selector (CS) priority value, and assigns a CS priority value to each core based on respective current values of each core's capabilities, current remaining resources in the computer system, and pre-emption restrictions of the software tasks currently executing on the CPU cores, and the CPU core with the currently highest CS priority value is stored at the head of the tree-based structure. The CS priority value is a composite metric that combines multiple factors affecting core suitability, including processing capabilities, available system resources, and constraints imposed by currently executing tasks. Core capabilities encompass instruction-set support, processing speed, cache configuration, and specialized processing features required by specific tasks. Remaining resources include memory, stack space, and other system resources that must be available for a new task to begin execution on a core. Pre-emption restrictions determine whether a currently executing task may be interrupted to allow a higher-priority task to run, based on the pre-emption threshold of the current task. The CS priority value calculation weights these factors to ensure cores with adequate resources and the least restrictive pre-emption thresholds receive higher CS priority values. By storing the core with the highest CS priority value at the head of the tree, the system ensures the most suitable core may be identified immediately. The CS priority based organization provides a standardized framework for comparing core suitability across diverse task requirements and system conditions.

Some tasks may have a core affinity that restricts their execution to one or a small number of cores, possibly due to specific hardware device connections to those cores. In that case, the method immediately determines the position of the affinity core in the hierarchical tree-based structure, which position may not be the head of the tree. If more than one affinity core is specified, the method determines the position of each affinity core in the tree and identifies the affinity core with the highest CS priority. If no affinity is involved, the selection mechanism retrieves the core identifier from the head position of the tree, which by design contains the core with the highest CS priority value among all cores in the tree. This selection approach provides an optimal core selection based on a comprehensive evaluation encoded in the CS priority value, balancing resource availability, core capabilities, and preemption considerations. The selection using the highest CS priority position eliminates the need to compare CS priority values across cores (except in cases where a task has more than one core affinity) or to traverse the tree to locate the optimal core, reducing selection time to a constant, independent of core count. The method ensures consistent selection of the most suitable core based on the current system state, without introducing selection bias or requiring manual priority adjustments.

The operating system may receive a request from a software interrupt handler in the computer system, which is a request to start executing a specific software task. Interrupt handlers respond to hardware or software interrupts by executing brief, time-critical code sequences that process interrupt conditions and determine appropriate responses. When an interrupt handler determines that a software task should be started, it notifies the operating system, which then initiates the task creation and core selection process. Interrupt-driven task initiation enables responsive system behavior, with external events triggering computational responses with minimal latency. The operating system serves as an intermediary between interrupt handlers and core selection mechanisms, managing task instantiation and coordinating core assignment. This approach allows interrupt handlers to remain simple and focused on interrupt processing while delegating task management responsibilities to the operating system.

The method may include receiving a notification from the operating system that the software task currently executing on the selected core has completed execution. Task completion represents the end of the execution lifecycle when the task has finished its assigned operations and no longer requires processing resources. The operating system monitors task execution and detects completion events, then notifies the core selection mechanism to enable updating of internal state information. This notification mechanism maintains synchronization between the operating system's view of task execution status and the core selection mechanism's internal data structures. Upon receiving a completion notification, the selection mechanism may update the CS priority value and tree position of the core that executed the completed task, restoring it to its previous state or making it available for new task assignment. The completion notification enables dynamic resource reclamation and ensures the tree structure accurately reflects the current system state.

The CS priority values and associated tree positions of the CPU cores in the hierarchical tree structure may be updated in a time period proportional to no more than the logarithm of the number of CPU cores. Tree reorganization following core selection or task completion involves adjusting the positions of cores within the tree to maintain the property that parent nodes have CS priority values equal to or higher than their children. The reorganization process proceeds along a single path from the modified node toward the tree's root or leaves, with the path length bounded by the tree's height. For a balanced binary tree containing N cores, the tree height is logarithmic in N, specifically floor(log₂(N)). Each reorganization step involves comparing priority values and potentially swapping core positions, with the number of such operations limited by the path length. This logarithmic time complexity represents a substantial improvement over linear approaches that would require examining all cores, particularly for systems with large core counts. For example, a system with 256 cores requires no more than 8 reorganization operations, while a system with 10,496 cores requires no more than 13 operations, regardless of system load or task execution patterns.

The CS priority values and associated tree positions of the CPU cores in the hierarchical tree structure may be updated and be ready for reuse in a time period proportional to no more than the logarithm of the number of CPU cores. Following completion of tree reorganization operations, the tree structure is immediately available for subsequent selection operations without requiring additional processing or stabilization time. The logarithmic time bound applies to the complete reorganization process, including all necessary updates to internal data structures, ensuring that the system returns to a ready state rapidly. This rapid reorganization and recovery capability enables the system to handle high rates of task initiation and completion without accumulating processing backlogs or introducing selection delays. The logarithmic time complexity maintains consistent performance across varying system scales, allowing the method to accommodate future increases in core counts without requiring architectural modifications or performance degradation.

The method may include selecting a CPU core by considering the current state of the dynamic hierarchical tree-based structure, recognizing that none of the CPU cores are available for the specific software task, and sending a notification to the operating system. The selection mechanism evaluates the core at the predetermined position to determine whether it satisfies the requirements for executing the specific software task, including resource availability and preemption threshold constraints. Suppose the evaluation determines that the predetermined core lacks necessary resources or has a preemption threshold that prevents it from being preempted. In that case, the selection mechanism may immediately conclude that no suitable core exists without examining other cores. This immediate unavailability determination follows from the tree structure property: if the optimal core is unsuitable, then all other cores must also be unsuitable. The notification to the operating system enables it to take appropriate action, such as queuing the task for later execution, adjusting task priorities, or reporting resource exhaustion. This rapid unavailability detection prevents wasted processing time that would be consumed by exhaustive core evaluation in heavily loaded systems.

The method may include determining whether the CPU core with the currently highest CS priority value that is stored at the head of the tree-based structure corresponds to the specified task, and if it is determined that it is not corresponding to the specified task, selecting a CPU core with the currently highest CS value from among the cores corresponding to the specified task or, if no such CPU core which corresponds to the specified task is available for the specified task, not selecting any core. Certain tasks may have affinity requirements that restrict execution to specific cores or subsets of cores based on hardware connectivity, cache locality, or specialized capabilities. When task affinity applies, the selection mechanism directly identifies the tree positions and CS priority values of the cores that satisfy the affinity requirement and evaluates their suitability for task execution. If the core at the head of the tree does not belong to the affinity set, the mechanism examines the cores in the set to identify the core with the highest priority value. The tree structure enables efficient identification of affinity cores through auxiliary indexing or by maintaining separate tree structures for different core subsets. If no core within the affinity set has adequate resources or a permissive pre-emption threshold, the mechanism reports unavailability to the operating system. This affinity-aware selection ensures that tasks execute on the appropriate cores while maintaining rapid selection through a tree-based organization.

The CPU cores may be organized into different dynamic hierarchical tree-based structures, each corresponding to a respective subset of the CPU cores. Maintaining separate tree structures for different core subsets enables independent management of cores with distinct characteristics or constraints. Each tree structure operates according to the same organizational principles: cores are arranged by CS priority values, with the optimal core for that subset positioned at the tree head. When selecting a core for a task, the appropriate tree is identified based on the task's requirements, and selection proceeds using that tree. This multi-tree approach accommodates systems where core subsets have different capabilities, are managed by different operating systems, or serve different functional roles. The separate tree structures may be reorganized independently in response to task execution events on their respective cores, maintaining efficient selection within each subset without interference from other subsets.

Each tree-based structure of the tree-based structures may correspond to a respective subset of the CPU cores, each CPU core in a subset having a specific capability type. Core capabilities may differ based on instruction set extensions, floating-point unit configurations, vector processing capabilities, or other architectural features that affect task compatibility. Grouping cores with identical capabilities into subsets and maintaining separate tree structures for each capability type enables rapid identification of cores suitable for tasks requiring specific capabilities. When a task requests a particular capability, the selection mechanism accesses the tree corresponding to that capability and selects the optimal core from that tree. This capability-based organization eliminates the need to filter cores by capability during the selection process, reducing selection time and simplifying the selection algorithm. Tasks that may execute on any core type may be directed to the tree representing the most common core type or to the tree with the currently most available resources. The capability-based tree organization provides a scalable framework for managing heterogeneous multi-core systems, where different cores offer distinct computational capabilities.

### BRIEF DESCRIPTION OF THE DRAWINGS

FIG. 1 illustrates an overall system showing the hardware and software elements of a computer system, according to an exemplary embodiment.
FIG. 2 illustrates a system diagram showing the relationships between various hardware and software components, according to an exemplary embodiment.
FIG. 3 illustrates an interaction between an operating system and a core selector module for managing tasks on multiple processor cores, according to an exemplary embodiment.
FIG. 4 illustrates a CS binary tree data structure used to organize processor cores with a particular capability in a multi-core computer system, according to an exemplary embodiment with 12 computer cores.
FIG. 5A illustrates a CS tree including CS Priorities for the computer cores before selecting an optimal computer core, according to an exemplary embodiment. Cores with CS Priorities not shown have CS Priorities of 100.
FIG. 5B illustrates the FIG. 5A CS tree including CS Priorities after one core select operation for a job that has resulted in a lower CS Priority 145, which job is now executing on core C1, with the tree re-organized with just one swap of cores, according to an exemplary embodiment.
FIG. 5C illustrates the FIG. 5A CS tree including CS Priorities after one core select operation for a job that has resulted in an even lower CS Priority 138, which job is now executing on core C1 with the FIG. 5A tree re-organized with just two swaps of cores, according to an exemplary embodiment.
FIG. 5D illustrates the FIG. 5C CS tree, including CS Priorities after the current job on core C3 that resulted in a CS Priority of 130 for core C3 has completed execution, and the previous job on C3 has resumed with C3 restored to its previous CS Priority 160, and the tree re-organized with just one swap, according to an exemplary embodiment.
FIG. 5E illustrates the FIG. 5D CS tree including CS Priorities after the current job on core C1 that resulted in a CS Priority of 138 for core C1 has completed execution on C1, and the previous job on C1 has resumed with C1 restored to its CS Priority 154, and the tree re-organized with just one swap, according to an exemplary embodiment.
FIG. 6 illustrates the composition of a CS Priority value as a single integer whose bits indicate the current attributes of the associated core.
FIG. 7 illustrates a heap array data structure implementation for a balanced binary tree used in selecting a core in a multi-core computer system, where the CS Priority of the core at position N is always greater than or equal to the CS Priority of the cores at position 2N and 2N +1 when these positions fall within the array, according to an exemplary embodiment.
FIG. 8 illustrates a position array used in a core selector module to track the location of each core in a CS tree, according to an exemplary embodiment.
FIG. 9 illustrates a core's information array, according to an exemplary embodiment.
FIG. 10 illustrates a core's information stack for storing preemption thresholds for jobs currently suspended or executing on the core, according to an exemplary embodiment.
FIG. 11 illustrates a sequence diagram showing task start request processing for requests from interrupt handlers or other sources, according to an exemplary embodiment.
FIG. 12 illustrates a flow diagram for executing software in a computer system controlled by an operating system and having a plurality of CPU cores, according to an exemplary embodiment.

### DETAILED DESCRIPTION

In the description below of the preferred embodiments of the present invention, the terms "CPU core," "computer core," "processing core," and "core" are used interchangeably and refer to a processing unit in a multi-core processor system capable of independently executing program instructions. Each core comprises hardware circuitry, including, but not limited to, an arithmetic logic unit (ALU), registers, cache memory, and control units that collectively perform computational operations. The terms "software component," "task," and "job" refer to executable program code that performs specific computational operations when processed by a CPU core. A "task" represents a defined unit of program code that may be scheduled for execution by an operating system, while a "job" represents an execution instance of a task that is created by the operating system and is either ready to execute, executing, or suspended waiting to resume execution on a CPU core. These terms may be used interchangeably where context permits.

The terms "module," "engine," and "component," when used in the software context, refer to portions of program code that perform specific functions or execute specific operations and may be implemented in software, firmware, hardware, or any combination thereof. A module comprises computer-executable instructions that, when executed by a processor core, cause the processor core to perform the described functions. For example, a "core selector module" comprises program instructions that, when executed, perform core selection operations. An "interrupt handler" or "interrupt service routine" refers to specific program code executed in response to specific hardware or software interrupts, typically running in a privileged execution mode with elevated system access permissions.

A "task priority" or "priority value" or "priority level" represents a numerical indicator used by the operating system to determine the relative urgency or importance of different tasks and their execution instances, or "jobs," and hence the execution order and preemption decisions among competing jobs. A "preemption threshold" represents a priority level associated with a task, such that a job of that task will only be preempted by the operating system if the job to be started has a higher task priority than the threshold.

A "tree structure" or "tree data structure", or "balanced binary tree" refers to a hierarchical organization of data elements stored in computer memory, where each element or "node" maintains specific relationships with other elements according to defined rules. The tree structure described herein may be implemented as an array, a linked list, or another suitable data structure in computer memory, and its implementation as a heap array is described.

"Capability" refers to a processing ability possessed by a subset of the cores, such as the ability to carry out vector processing operations. The CS module maintains a separate CS tree for each subset and uses it when the operating system informs it that the job to be started requires a specific capability.

"Affinity" refers to a task being restricted to execution on a specific CPU core or on a limited range of CPU cores, usually due to a hardware connection between a hardware device and a specific CPU core or a limited range of CPU cores such that a task that controls, manages or monitors the hardware device may need to be restricted to using that specific CPU core or to a core in the specified range. The CS module directly checks the specific CPU core or a range of cores when the operating system informs it that the job to be started has an affinity.

In the context of this disclosure, an optimal core is the CPU core that best satisfies the multiple selection criteria for executing a given job. The optimal core must possess the required capabilities, respect any job affinity, and have sufficient remaining resources to allow execution of a new job to commence. Optimal selection minimizes disruption to higher priority jobs by selecting either a core that is currently idle or is currently executing the job with the lowest preemption threshold among all suitable cores, and ensures that software execution is distributed evenly across usable cores to optimize overall system performance, and, where applicable may take additional core characteristics into account such as lower power consumption or current temperature.

The terms "system" and "method" are used throughout this specification to describe both apparatus and process aspects of the disclosed technology, as structural and functional features are interrelated in computer-implemented inventions.

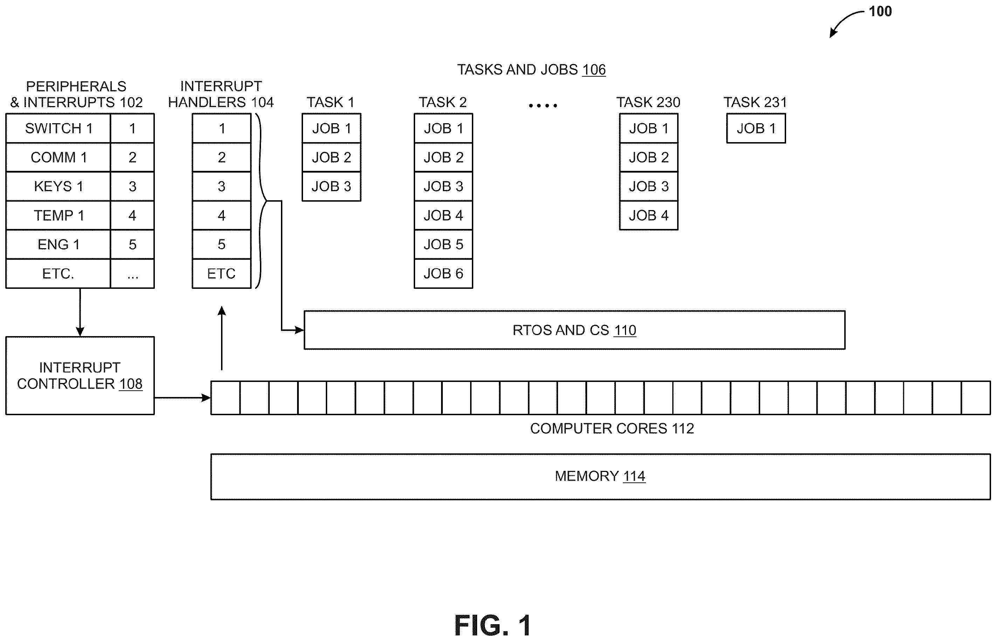

FIG. 1 illustrates an overall system 100 showing the hardware and software elements of a computer system, according to an exemplary embodiment. In an embodiment, the hardware and software elements or components shown in FIG. 1 may be associated with interrupt handling and task execution.

The overall system 100 may include elements, for example, peripherals and interrupts 102, an interrupt controller 108, multiple interrupt handler software components 104, a collection of software tasks and jobs 106, a real-time operating system and core selector (an RTOS and CS) 110, multiple computer cores 112, and memory 114. The peripherals and interrupts 102 may represent various hardware devices monitored and controlled by the operating system and application software tasks, as well as interrupt handlers. Examples of such peripherals, as shown in FIG. 1, may include Switch1, Comm1, Keys1, Temp1, and Eng1, each of which is associated with a unique interrupt number, such as interrupt 1 for Switch1, interrupt 2 for Comm1, and so forth. The peripherals 102 may generate specific hardware signals to the interrupt controller, which causes the interrupt controller to assert the corresponding interrupt.

The interrupt controller 108 may be a hardware unit configured to receive the hardware signals from the peripherals 102. Upon receiving a hardware signal, the interrupt controller 108 may send a corresponding interrupt signal to a specific CPU core. The interrupt handlers 104, shown as numbered software modules (e.g., 1, 2, 3, 4, 5, etc.), may be software routines designed to process specific interrupts. The start addresses in memory 114 of each interrupt handler 104 may be stored in a table, which may be indexed by an interrupt number, enabling the computer cores 112 to locate and then execute the appropriate handler directly. The tasks and jobs 106 may represent software components that perform the system's main processing functions. Tasks, such as Task1, Task2, ...Task230, and Task231, may have multiple execution instances, referred to as jobs (e.g., Job1, Job2, Job3 for Task1; Job1 through Job6 for Task2, and so forth). These tasks may vary in urgency or importance, as indicated by numerical priority values. The RTOS and CS 110 may represent the operating system and core selector mechanism; the RTOS may be a real-time operating system communicatively coupled with the core selector mechanism. The RTOS and CS 110 may execute operations to manage the scheduling and execution of task jobs 106. The computer cores 112 represents the central processing units capable of executing software instructions fetched from memory 114. The memory 114 may be a storage medium configured to store the machine code for the software, including interrupt handlers 104 and tasks 106.

In the context of this disclosure, a computer core, or CPU core, is a hardware processing element in a computer system that is operable or configured to fetch machine code instructions from memory, execute the corresponding instructions, and repeat this cycle continuously. Modern computer systems often feature multiple cores, enabling the simultaneous execution of different programs or program components, thereby achieving enhanced overall performance. Examples of multi-core processors include AMD Ryzen with up to 64 cores, IBM Power10 with up to 30 cores, Intel Xeon with up to 56 cores, Kalt ray MPPA-256 with 256 cores, and Nvidia 3090 with 10,496 cores of various types. Each core may have different capabilities, connectivity to specific peripherals, and power-consumption characteristics, and may execute operations in different execution modes, including normal execution mode and privileged execution mode for handling interrupts. In embedded systems that utilize a real-time operating system (RTOS), the cores execute both exception and interrupt handlers that respond to specific hardware events and software tasks that perform the main system functions. The core selector module allocates jobs across available cores to optimize system performance. In an embodiment, in the CS (Core Selector) architecture, the optimal core is identified as the core positioned at the top of a CS tree structure when there are no core affinity restrictions for a job, and always as having the highest CS Priority value among cores meeting the job's requirements, thereby enabling the CS system to directly identify the optimal core rather than having to check through all cores, with the CS system reorganized for subsequent use in time proportional to no more than the logarithm of the number of cores.

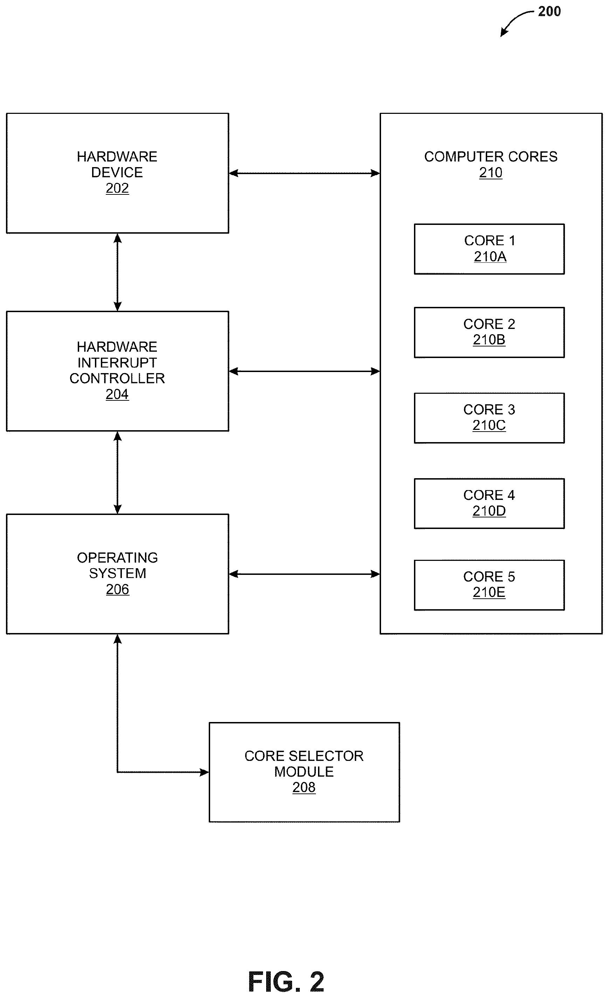

FIG. 2 illustrates a system 200 showing the relationships among various hardware and software components for selecting a central processing unit (CPU) core from multiple CPU cores 210 for execution of software tasks, according to an exemplary embodiment. FIG. 2 is described in conjunction with FIG. 1. In an embodiment, the system diagram 200 shows the hardware and software architecture that enables efficient core selection in multi-core computer systems. The system 200 comprises a hardware device 202, a hardware interrupt controller 204, an operating system 206, a core selector module 208, and computer cores 210, which implement the method and system described in the present disclosure.

The hardware device 202 may be configured to generate signals that initiate processing requests within the system 200. The hardware device 202 may represent one or more peripheral devices, sensors, communication interfaces, or other hardware components that require computational processing from the computer cores 210. The hardware device 202 may be operatively connected to the hardware interrupt controller 204 through one or more signal paths. When the hardware device 202 detects an event requiring processing attention, it may transmit a signal to the hardware interrupt controller 204. The hardware device 202 corresponds to the peripherals and interrupts 102 shown in FIG. 1 and provides the external stimulus that initiates the task execution process.

The hardware interrupt controller 204 may be configured to receive signals from the hardware device 202 and generate corresponding interrupt signals directed to one or more of the computer cores 210. The hardware interrupt controller 204 may function as an intermediary component that translates hardware events into interrupt signals recognizable by the computer cores 210. When the hardware interrupt controller 204 receives a signal from the hardware device 202, it may determine which computer core 210 should receive the interrupt signal. The hardware interrupt controller 204 may then transmit the interrupt signal to the selected computer core, causing that core to suspend its current execution, change to a privileged execution mode, and begin executing interrupt handler software. The hardware interrupt controller 204 corresponds to the interrupt controller 108 shown in FIG. 1. The hardware interrupt controller 204 enables the system to respond to external events, which may subsequently result in task start requests being sent from interrupt handlers to the operating system 206.

The operating system 206 may be configured to manage the execution of software tasks across the multiple computer cores 210. The operating system 206 may receive requests to start execution of specific software tasks from interrupt handlers or from other software executing on the computer cores 210. Upon receiving such a request, the operating system 206 may create an execution instance of the requested task, referred to as a job, and may prepare job information associated with that job. The job information may include a job identifier, a priority value, a pre-emption threshold value, capability requirements, and affinity restrictions. The operating system 206 may then transmit a request to the core selector module 208 to select an appropriate CPU core from amongst the computer cores 210 for executing the job. The operating system 206 corresponds to the RTOS component shown as reference 110 in FIG. 1 and implements the operating system functionality.

The operating system 206 may be further configured to receive a response from the core selector module 208. For instance, the response may include either an identifier for a selected core from the computer cores 210 or an indication that no core is available for the requested job. When the operating system 206 receives a core identifier, the operating system 206 may pre-empt the identified core from any currently executing job, save the state of the pre-empted job for later resumption, and place the new job into execution on the selected core. The operating system 206 may monitor the execution of the job on the selected core and, upon the job's completion, notify the core selector module 208 that the job has terminated. The operating system 206 may receive a notification from the O/S that the software task currently executing on the selected core has completed execution. The operating system 206 may also resume execution of any previously preempted job after the higher-priority job completes.

The core selector module 208 may be configured to select an optimal CPU core from amongst the computer cores 210 for executing a specific software job based on a dynamic hierarchical tree-based structure. The core selector module 208 may receive job information from the operating system 206. For instance, the job information includes parameters such as job priority, pre-emption threshold, capability requirements, and core affinity restrictions. The core selector module 208 uses the tree-based structure to identify a CPU core that may be selected from among the multiple CPU cores 210 for executing the specific software job in response to a request from the operating system 206. The core selector module 208 may then transmit an identifier of the selected CPU core to the operating system 206.

The core selector module 208 may maintain the multiple computer cores 210 in a dynamic hierarchical tree-based structure. The dynamic hierarchical tree-based structure may organize the computer cores 210 based on their current suitability for selection. The suitability may be determined by multiple factors, including remaining resources, pre-emption threshold of currently executing jobs, and capability characteristics. The tree-based structure maintained by the core selector module 208 may dynamically change as the execution states of the multiple software tasks executing on the plurality of computer cores 210 change. When a new job begins execution on one of the computer cores 210, the core selector module 208 may update the tree-based structure to reflect the core's new state. Similarly, when a job completes execution on one of the computer cores 210, the core selector module 208 may again reorganize the tree-based structure to reflect the core's restored availability.

The core selector module 208 may assign a core selector (CS) priority value to each of the computer cores 210, indicating a core's suitability for selection. The CS priority value assigned to each core may be calculated based on the respective current values of each core's capabilities, the current remaining resources in each core, and the preemption restrictions of the software job currently executing on each core. The core selector module 208 may organize the computer cores 210 in a hierarchical tree structure, with the CPU core having the currently highest CS priority value at the root or head of the tree. The core selector module 208 thereby ensures that a currently optimal core is located at a predetermined position within the tree-based structure. The predetermined position of the tree-based structure may be at its head.

The core selector module 208 may perform the selecting step by considering the current state of the dynamic hierarchical tree-based structure and selecting the CPU core located at the predetermined position within the tree-based structure. The core selector module 208 may access the head position of the tree-based structure to identify the core with the highest CS priority value. The core selector module 208 may then verify that the identified core has sufficient remaining resources and that the pre-emption threshold of any job currently executing on that core is lower in priority than the new job's priority. If these conditions are satisfied, the core selector module 208 may select the CPU core with the currently highest CS priority value stored at the head of the tree-based structure. The core selector module 208 may then return the identifier of the selected core to the operating system 206, or if these conditions are not satisfied, return an unavailable indication to the operating system 206.

The core selector module 208 may also be configured to manage job affinity restrictions. When the job information received from the operating system 206 includes core affinity restrictions that limit execution to specific cores, the core selector module 208 may execute operations to determine whether the CPU core with the currently highest CS priority value stored at the head of the tree-based structure corresponds to the specified task. If the core selector module 208 determines that the core at the head position does not correspond to the specified task due to affinity restrictions, the core selector module 208 may select a CPU core with the currently highest CS value from among the cores corresponding to the specified job. If the core selector module 208 determines that no core that corresponds to the specified task may be available for the specified task, the core selector module 208 may select no core and may return an unavailable indication to the operating system 206.

The core selector module 208 may be further configured to recognize situations in which none of the multiple computer cores 210 are available for the specific software task. The core selector module 208 may consider the current state of the dynamic hierarchical tree-based structure and may recognize that none of the plurality of CPU cores 210 may be available when the core at the head of the tree has insufficient resources or when the pre-emption threshold of the job executing on the head core may be equal to or higher in priority than the new job's priority. In such cases, the core selector module 208 may send a notification to the operating system 206 indicating that no core may be available.

The core selector module 208 may reorganize the tree-based structure following core selection or job completion in a time period proportional to no more than the logarithm of the number of CPU cores. When a core is selected for a new job, the core selector module 208 may update the CS priority value for that core based on the new job's preemption threshold and the remaining resources. The core selector module 208 may then reorganize the tree-based structure by comparing the updated CS priority value with the child node values and performing swaps as needed to maintain the heap property, ensuring that each parent node has a CS priority value greater than or equal to that of its children. The number of swap operations required may be proportional to the tree's depth, which is logarithmic relative to the number of cores. Similarly, when the operating system 206 notifies the core selector module 208 that a job has completed execution on a particular core, the core selector module 208 may restore the previous CS priority value for that core and reorganize the tree-based structure through upward comparisons and swaps. The CS priority values and associated tree positions of CPU core 210 in the hierarchical tree structure may be updated and made ready for reuse within a time period proportional to the logarithm of the number of CPU cores.

The core selector module 208 may maintain multiple dynamic hierarchical tree-based structures when different cores have different capability types. The plurality of computer cores 210 may be organized in multiple dynamic hierarchical tree-based structures, where each tree-based structure corresponds to a respective subset of the plurality of computer cores 210. Each tree-based structure of the plurality of tree-based structures may correspond to a respective subset of the plurality of computer cores 210, where each CPU core in a subset has a specific capability type. When the core selector module 208 receives job information from the operating system 206 that includes specific capability requirements, the core selector module 208 may select the appropriate tree-based structure corresponding to the required capability type and may then select the optimal core from within that tree-based structure.

The core selector module 208 corresponds to the CS component shown in reference 110 of FIG. 1 and implements the core selection functionality. The core selector module 208 may maintain internal data structures including a CS tree implemented as a heap array, a position array for tracking core positions within the tree, a cores information array for storing per-core data, and ceiling stacks for each core. The core selector module 208 may use these data structures to efficiently manage the dynamic tree-based organization of the computer cores 210 and to perform rapid core selection operations.

The computer cores 210 may comprise a plurality of individual processing cores, as shown in FIG. 2, including core 1 (210A), core 2 (210B), core 3 (210C), core 4 (210D), and core 5 (210E). The computer cores 210 represent multiple CPU cores, and each of the computer cores 210 may be configured to fetch machine code instructions from memory, execute those instructions, and repeat this process in a continuous cycle. Each of the computer cores 210 may be capable of executing software tasks concurrently with the other computer cores 210, thereby allowing simultaneous execution of different programs or different parts of programs to provide greater overall performance.

Each of the computer cores 210 may have associated execution states that change as software tasks begin execution, execute over time, and complete execution. The execution states associated with each of the computer cores 210 may include whether the core may be idle or executing a job, the priority of any currently executing job, the pre-emption threshold of any currently executing job, the remaining resources available to that core, and the capabilities of that core. The execution states of the multiple software tasks executing on the plurality of computer cores 210 may change over time as jobs start and complete, and these changing execution states may cause the dynamic hierarchical tree-based structure maintained by the core selector module 208 to reorganize dynamically.

The computer cores 210 may receive interrupt signals from the hardware interrupt controller 204, causing the receiving core to suspend execution of its current software, change to a privileged execution mode, and begin executing interrupt handler software. After the interrupt handler completes, the computer core may return to normal execution mode and resume the previously executing software. The computer cores 210 may also receive preemption commands from the operating system 206, causing a currently executing lower-priority job to be suspended and a higher-priority job to begin execution. The computer cores 210 may notify the operating system 206 when jobs complete execution, allowing the operating system 206 to resume previously preempted jobs and inform the core selector module 208 of job completion.

Some of the computer cores 210 may have different processing capabilities, power consumption characteristics, temperature profiles, or peripheral device connectivity. When different subsets of the computer cores 210 have different capabilities, the core selector module 208 may maintain separate tree-based structures for each capability type. The computer cores 210 correspond to the computer cores shown as reference 112 in FIG. 1 and represent the execution resources that may be allocated by the operating system 206 under the guidance of the core selector module 208.

In operation, the system 200 efficiently selects CPU cores 210 from the computer's cores 210 to execute software tasks in a multi-core computing environment. The operation may begin when the hardware device 202 generates a signal indicating that processing may be required. The hardware device 202 may send a signal to the hardware interrupt controller 204, which may translate it into an interrupt directed to one of the computer cores 210. The selected computer core receiving the interrupt signal may suspend its current execution, switch to a privileged execution mode, and begin executing the interrupt handler software corresponding to the interrupt type.

During execution of the interrupt handler software on the computer core, the interrupt handler may determine that a specific software task should be started to process the event that triggered the interrupt. The interrupt handler may issue a task start request to the operating system 206. The operating system 206 may receive the task start request from the interrupt handler. Upon receiving the task start request, the operating system 206 may attempt to instantiate an execution instance of the requested task, creating a job with associated job information. The job information created by the operating system 206 may include a job identifier, a priority value indicating the urgency of the job, a pre-emption threshold value indicating which other jobs may pre-empt this job, capability requirements indicating which types of cores may execute the job, and optionally, affinity restrictions indicating specific cores that must be used for the job.

The operating system 206 may then transmit a request to the core selector module 208 to select a CPU core from amongst the plurality of computer cores 210 for executing the job. This transmission implements a request to select a CPU core that may be received from the operating system 206. The request transmitted to the core selector module 208 may include the job information prepared by the operating system 206.

Upon receiving the request and job information from the operating system 206, the core selector module 208 may begin selecting an optimal CPU core to execute the job. The core selector module 208 may maintain a dynamic hierarchical tree-based structure that organizes the computer cores 210, with the tree changing as the execution states of jobs on the cores and the corresponding CS priorities change. At any given time, a currently optimal core may be located at a predetermined position of the tree-based structure, specifically at the head position of the tree.

The core selector module 208 may access the head position of the tree-based structure to identify the core with the highest CS priority value. The core selector module 208 may then evaluate whether the identified core may be suitable for the new job. This evaluation may include determining whether the core has the required capabilities if capability restrictions apply, whether the core satisfies affinity restrictions if such restrictions have been specified, whether the core has sufficient remaining resources to allow a new job to begin, and whether the pre-emption threshold of any job currently executing on the core may be lower in priority than the priority of the new job.

If the job information includes affinity restrictions that limit execution to specific cores, the core selector module 208 may determine whether the CPU core at the head of the tree corresponds to the specified task. If the head core does not satisfy the affinity restrictions, the core selector module 208 may identify the positions of the affinity-restricted cores within the tree-based structure using internal position-tracking data structures. The core selector module 208 may then select a CPU core with the currently highest CS priority value from among the cores that satisfy the affinity restrictions. If no such core is available, the core selector module 208 may determine that no core may be selected.

When the core at the head of the tree (or the highest CS priority affinity-compliant core) has insufficient resources or when the pre-emption threshold of the job executing on that core may be equal to or higher than the new job's priority, the core selector module 208 may recognize that none of the plurality of computer cores 210 may be available for the specific software task. In this situation, the core selector module 208 may send a notification to the operating system 206 indicating that no core is available. The operating system 206 may then handle the unavailable condition by queuing the job for later execution or taking other appropriate action.

When the core selector module 208 identifies a suitable core for the new job, it may select that CPU core and prepare to return its identifier to the operating system 206. Before returning the identifier, the core selector module 208 may update internal data structures to reflect the selection. The core selector module 208 may record the previous state of the selected core for later restoration. The core selector module 208 may calculate a new CS priority value for the selected core based on the new job's preemption threshold and the remaining resources available after the new job begins. The new CS priority value for the selected core is typically lower than the previous value because the core is executing a job and has fewer available resources.

The core selector module 208 may then reorganize the dynamic hierarchical tree-based structure to accommodate the changed CS priority value of the selected core. The reorganization may be performed by comparing the new CS priority value of the selected core with the CS priority values of its child nodes in the tree. If either child node has a higher CS priority value than the selected core's new value, the core selector module 208 may swap the selected core with the child having the highest CS priority value. This swapping process may continue down the tree until the selected core reaches a position where both of its children have CS priority values less than or equal to the selected core's CS priority value, or until the selected core reaches a leaf position in the tree. The reorganization process may require a number of operations proportional to no more than the logarithm of the number of CPU cores, because the depth of a balanced binary tree grows logarithmically with the number of nodes.

After updating the tree-based structure, the core selector module 208 may send the identifier of the selected CPU core to the operating system 206. The operating system 206 may receive the core identifier from the core selector module 208 and then place the new job into execution on the selected core. If the selected core is currently executing another job with a lower priority, the operating system 206 may preempt the core from that job. The pre-emption process performed by the operating system 206 may include saving the execution state of the currently executing job so that it may be resumed later, and then loading the execution state of the new, priority job onto the selected core. The selected core may then begin executing the new job.

The new job may execute on the selected core for a period of time that depends on the nature of the task being performed. During execution, the computer core may fetch instructions from memory, execute those instructions, access data, perform computations, and interact with other system components as required by the job. Other computer cores 210 may simultaneously be executing their own jobs, and the execution states across all the computer cores 210 may continuously change as jobs progress, complete, and new jobs begin.

Eventually, the new job executing on the selected core may be completed. Upon completion, the operating system 206 may detect that the job has finished and may notify the core selector module 208 that the job has terminated. The operating system 206 may send a notification to the core selector module 208 indicating the core identifier of the core on which the job just completed. The operating system 206 may then resume execution of any job that was previously pre-empted on that core, restoring the pre-empted job's saved execution state.

Upon receiving a notification from the operating system 206 that a job has completed on a particular core, the core selector module 208 may update its internal data structures to reflect the core's new state. The core selector module 208 may retrieve previously saved state information for the core recorded when the job was initially started on that core. The core selector module 208 may restore the CS priority value for the core to its previous value, which is typically higher than the value during job execution because job completion frees up resources and may restore a lower pre-emption threshold.

The core selector module 208 may then reorganize the dynamic hierarchical tree-based structure to reflect the restored CS priority value of the core. The reorganization following job completion may be performed by comparing the restored CS priority value of the core with that of its parent node in the tree. If the restored CS priority value may be higher than the parent's CS priority value, the core selector module 208 may swap the core with its parent. This upward swapping process may continue until the core reaches a position where its parent's CS priority value is greater than or equal to the core's CS priority value, or until the core reaches the head position of the tree. The reorganization process following job completion may also require a number of operations proportional to the logarithm of the number of CPU cores. After the reorganization completes, the CS priority values and associated tree positions of the CPU cores 210 in the hierarchical tree structure may be updated and ready for reuse when selecting cores for subsequent job requests.

The operational cycle described above may repeat continuously as the system 200 may generate signals, interrupt handlers may request task starts, the operating system 206 may create jobs and request core selections, the core selector module 208 may select optimal cores and maintain the dynamic tree-based structure, cores may execute jobs and notify upon completion, and the tree-based structure may be reorganized to reflect the changing execution states. Through this operational process, the system 200 may allocate the computational resources of the computer cores 210 to execute software tasks while minimizing delays in starting urgent tasks and optimizing overall system performance.

The tree-based approach implemented by the core selector module 208 may provide performance advantages over conventional approaches that sequentially check all cores. When a core must be selected, the core selector module 208 may immediately access the tree head to identify the optimal core without examining all cores individually. When no suitable core is available, this condition may be detected immediately by examining only the head of the tree, without checking all cores. When the tree must be reorganized following core selection or job completion, the number of operations required may grow logarithmically rather than linearly with the number of cores. For the system 200 with five cores, as shown in FIG. 2, the maximum number of reorganization operations may be two. For larger systems with dozens or hundreds of cores, the logarithmic scaling may provide substantial performance improvements over linear approaches.

When the computer system 200 includes computer cores 210 with different capability types, the core selector module 208 may maintain a plurality of dynamic hierarchical tree-based structures, where each tree-based structure corresponds to a respective subset of the plurality of computer cores 210 having a specific capability type. In this configuration, when the operating system 206 sends a request to select a core with specific capability requirements, the core selector module 208 may first determine which tree-based structure corresponds to the required capability type and then perform the core selection process using that structure. The operation within each capability-specific tree may proceed as described above for the single-tree case.

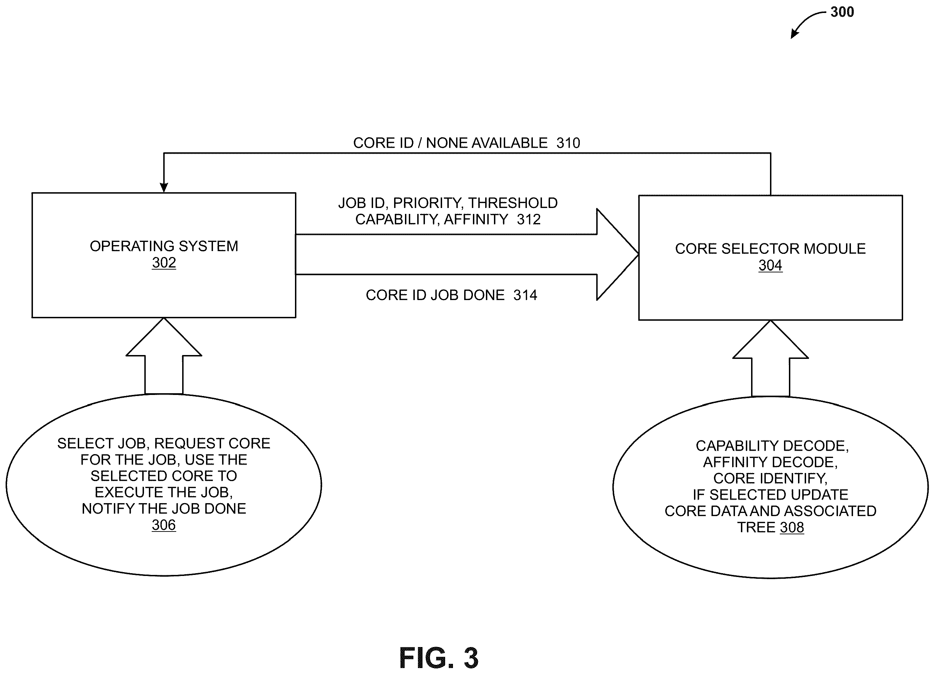

FIG. 3 illustrates an environment 300, showing the interaction or information flow and execution of operations between the operating system 302 and the core selector module 304 for managing tasks on multiple cores, according to an exemplary embodiment. The operating system 302 performs operations 306, including selecting a job, requesting a core for the job, using the selected core to execute the job, and notifying that the job is completed. The core selector module 304 performs operations 308, including capability decode, affinity decode, core identification, and, if selected, updates core data and the associated tree. The arrow labeled "JOB ID, PRIORITY, THRESHOLD, CAPABILITY, AFFINITY" 312 from the operating system 302 to the core selector module 304 indicates the flow of information between these two elements when the operating system 302 requests the core selector module 304 to select a CPU core. The label "CORE ID JOB DONE" 314 on the same arrow from the operating system 302 to the core selector module 304 also shows information flow between these elements that occurs when the operating system notifies the core selector module that a task job has completed execution on a core, and will also be described below. The "CORE ID / NONE AVAILABLE" 310 label on the other arrow indicates the path from the core selector module 304 back to the operating system 302 to notify it of the identity of the selected core, or instead that no core is currently available for the specified task job, and will also be described below.

The operating system 302 may execute operations for overall task management in the computer system. The operating system 302 may determine which job needs to be executed and may gather information pertinent to that job. This information may include a job ID, a unique identifier for the job, a priority, indicating the job's urgency or importance, and a preemption threshold. The operating system 302 may determine if the job has specific capability requirements, for example, it may need a core with certain features, or if it has an affinity for a specific core or set of cores, for example, it may be restricted or preferred to run on certain cores due to hardware connections or other factors.

The core selector module 304 may be configured initially by the operating system or by system startup software. This involves providing the CS module with information on the current set of cores to be used, any capability subsets within this set, and the initial state of each core, including any resource constraints that apply. Based on this information, the core selector module 304 may execute several internal operations. These operations may include recording the initial state information and a corresponding CS Priority for each core, creating a CS tree for each capability subset of cores, locating each core in a position in the appropriate CS tree, and recording the tree position of each core in the core's information.

The core selector module 304 may receive job-related information from the operating system 302. Based on the received job ID, priority, preemption threshold, capability, affinity, and any other relevant information, the core selector module 304 may execute several internal operations. The core selector module 304 may execute operations to perform capability decode to understand and match core capabilities with job requirements, and affinity decode to manage any core affinity restrictions. The core selector module 304 may maintain core data, which includes information about each core's current state, and may update a core's data, its CS Priority, and the core selector tree (CS tree). The CS tree may correspond to a data structure such that the optimal core to use may be identified directly as the core at the head of the CS tree when there are no core affinity restrictions, and such that if this optimal core does not have remaining resources sufficient to allow a new job begin no core has sufficient resources to allow a new job begin and such that if this optimal core is executing a job with a preemption threshold that is not lower than the priority of the job to be started then no core is executing a job with a lower preemption threshold than the job to be started. The core selector module 304 may return a core ID to the operating system 302, thereby selecting the identified core, or return a message indicating that no core is currently available for the specified job. The operating system 302 may then use the core identified by the received core ID to execute the job, or, if no core is available, may retry later. In the former case, once the job is complete, the operating system 302 may notify the core selector module 304 that the job is done, which may result in the core selector module 304 updating its core data and the corresponding CS tree to reflect the core's changed CS Priority.

In operation, the operating system 302 may first select a job for execution. The operating system 302 may then request a core for the job from the core selector module 304 by sending information such as the job ID, priority, preemption threshold, capability requirements, and affinity restrictions. The core selector module 304 may receive this information, perform capability decode and affinity decode, access its current core data, identify the optimal core, and if this is available for use, select it, return its core ID to the operating system, update both the core's data and the core's CS Priority, and reorganize the CS tree. The operating system 302 may use the selected core to execute the job. Once the job is complete, the operating system 302 may notify the core selector module 304 that the job is finished. The core selector module 304 may then update the core's data and its CS Priority, as well as update the CS tree to reflect the core's changed CS Priority.

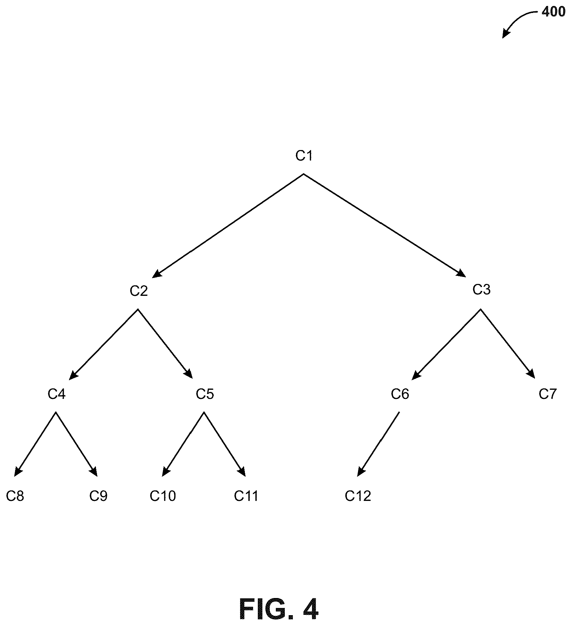

FIG. 4 illustrates data structures for organizing processor cores in a multi-core computer system, according to an exemplary embodiment. Specifically, FIG. 4 illustrates an exemplary core selector tree (CS tree) that uses a balanced binary tree structure to organize multiple computer cores. Where different subsets of CPU cores have different capabilities, there may be a separate balanced binary tree for each capability subset, such as the CS tree structure shown in FIG. 4, which may include multiple nodes, each representing a computer core with the particular capability associated with that tree. The CS tree illustrated in FIG. 4 shows a root core designated as C1. Core C1 is shown as a parent node to child cores C2 and C3. In this hierarchy, core C2 is the parent of the child cores C4 and C5, and core C3 is the parent of the child cores C6 and C7. Further, core C4 is a parent to child cores C8 and C9, and core C5 is a parent to child cores C10 and C11. Core C6 is shown as a parent to a single child, Core C12 in this illustration, while Core C7 is shown without any child cores. FIG. 4 illustrates the CS tree corresponding to balanced binary trees of cores, e.g., for 12 cores with identical capabilities. This CS tree structure serves as an example configuration for 12 cores, C1 through C12. The connections between the parent core and the child cores are represented by arrows pointing from the parent to its children, indicating the hierarchical relationship.

The CS tree shown in FIG. 4 is a balanced binary tree that organizes computer cores hierarchically, with core C1 at the top (root) of the tree. Each specific capability subset of cores has a corresponding CS tree, with each core in that subset having that capability. Each core acting as a parent node, such as C1, C2, C3, C4, C5, and C6, may have up to two direct child cores. The CS tree shows multiple levels. for example, C1 forms the first level; C2 and C3 form the second level; C4, C5, C6, and C7 form the third level; and C8, C9, C10, C11, and C12 form the lowest levels depicted in this specific example. The term balanced may correspond to or mean that for any node in the tree, the height of its left and right subtrees differs by no more than one, and both subtrees are themselves balanced. A balanced binary tree with 12 nodes may have no more than 3 levels below the root or top node, as shown, and a balanced binary tree with N nodes may have no more levels below the root or top node than the integer part of log₂(N). This property of balance may improve the efficiency of operations on the tree, such as searching for a specific core or reorganizing the tree structure.

In operation, the CS tree structure, as shown in FIG. 4, may be utilized and maintained by a core selector module used by an operating system. The specific position of each core C1 to C12 in this CS tree may be dynamically determined by the current CS Priority value associated with each respective core. This CS Priority may serve as an indicator of a core's optimality for selection to execute a new job, thereby reflecting factors such as the core's current available resources, the preemption threshold of the job currently executing on it, and other current characteristics, so that a greater CS Priority corresponds to greater suitability for meeting requirements. The CS tree may be organized such that the CS Priority of a core in any given tree position is never smaller than the CS Priority of either of the cores in the next two positions down when either of these exist, with the result that the CS Priority of the core at the top position in the tree is always the highest value for cores on the tree, which highest value may be shared by a number of cores. As a result of this organization, the core located at the root or top of the tree, for example, C1, may represent the most suitable or optimal core for assigning to a new job. When the job has no specific affinity requirements that may necessitate using another core, and the top core meets any resource or preemption criteria for the new job, the core at the root or top of the CS tree may be identified directly and selected to execute the job. Where the job to be started has a specific core affinity that restricts its execution to a specific core, that core is also identified directly. When a core is restricted to execution on a limited range, the cores in that range may be checked, and the core with the highest CS Priority may be identified as the one to use.

When a core is selected to execute a job, or when a job running on a core is completed, the CS Priority of that core may be updated. Such an update to a core CS Priority may instantiate a reorganization of the CS tree to preserve the defined CS Priority-based ordering. This reorganization ensures that the most suitable core may continue to be identified directly at the root or top of the tree. The balanced nature of the binary tree helps ensure that these reorganization operations may be performed in time proportional to the number of levels below the top node, which is no more than the integer part of log₂(number of cores in the tree), rather than in time proportional to the number of cores. The logarithmic time complexity enables efficient core selection, even in systems with thousands of cores, ensuring rapid response times essential for real-time systems. This allows for selecting the optimal core across all cores and distributing the computational load across available processing resources.

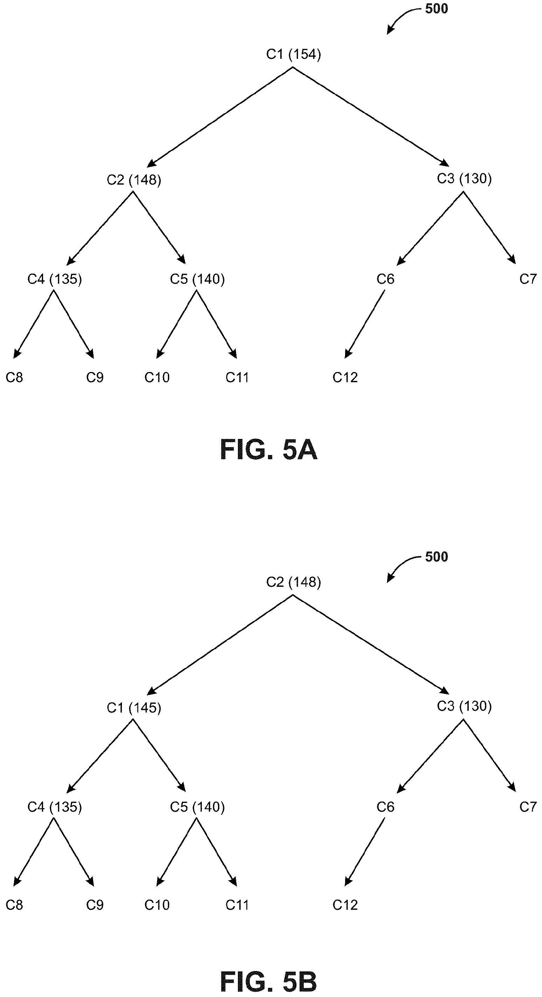

FIG. 5A illustrates a CS tree including CS Priorities for the computer cores before selecting an optimal computer core, according to an exemplary embodiment. In an embodiment, FIG. 5A shows that the CS tree may include 12 cores, here labelled C1 through C12, arranged in a balanced binary tree structure. The CS tree illustrates the hierarchical organization of cores based on their CS Priority values, where each core's position in the CS tree may be determined by its CS Priority relative to other cores. Cores C6 to C12 for which CS Priorities are not given may be regarded as having CS Priorities of 100.

At the top of the CS tree, core C1(154) is positioned with a CS Priority value of 154. The CS Priority value 154 indicates the current state of core C1, based on whether the core is enabled, has sufficient remaining resources, and the preemption threshold of any job currently executing on that core, and may also include other factors. As the highest-positioned core in the tree, C1(154) represents a core that may be selected for job execution if it is currently enabled and has adequate resources, and the preemption threshold of its currently executing job is a lower task priority than the task priority of the job to be started, factors that may be determined readily from its CS Priority. Below C1(154), two child cores, C2(148) and C3(130), are positioned at the second level of the tree. Core C2(148) has a CS Priority value of 148, while core C3(130) has a CS Priority value of 130. The arrangement ensures that neither C2(148) nor C3(130) has a higher CS Priority than their parent, C1(154). This hierarchical arrangement ensures that the core at the top of the tree always has the highest or equal CS Priority to all cores below it in the tree.

At the third level of the tree, cores C4(135) and C5(140) are positioned as children of C2(148), and cores C6 and C7 may be positioned as children of C3(130). Core C4(135) has a CS Priority value of 135, and core C5(140) has a CS Priority value of 140. Cores C6 and C7 are shown without explicit CS Priority values, indicating that these cores may have CS Priority values of 100. The positioning of C4(135) and C5(140) under C2(148) maintains the CS tree property, in which both child cores have CS Priority values less than or equal to their parent's value of 148. At the bottom level of the tree, cores C8, C9, C10, C11, and C12 are positioned. These cores are shown without explicit CS Priority values, indicating that each has a CS Priority of 100. Cores C8 and C9 are positioned as children of C4(135), cores C10 and C11 are positioned as children of C5(140), and core C12 is positioned as a child of C6, with which it has the same CS Priority of 100. The arrangement at this level continues to maintain the tree property where no child core has a higher CS Priority than its parent core on the tree.

The CS tree structure is illustrated in FIG. 5A represents a specific state of the system at the point when the operating system requests that a core be selected for job execution. The CS Priority values shown for each core may include the combination of resource availability and the preemption threshold of any job currently executing on that core. The cores with higher CS Priority values may be more suitable for selection, as they either have more available resources or are executing lower-priority jobs that may be preempted if needed. The CS tree shown in FIG. 5A illustrates how the tree maintains a balanced structure, with all levels except the last fully or partially filled. This balanced structure enables efficient traversal and reorganization operations when CS Priority values change. The specific CS Priority values shown (e.g., 154 for C1, 148 for C2, 130 for C3, 135 for C4, and 140 for C5) represent the system state that may be used to illustrate various core selection mechanisms. The cores C6 to C12 are to be regarded as having CS Priorities of 100.

In operation, when the operating system requests core selection for a new job without a specific affinity restriction, the CS module identifies the capability requirement for that job and then selects the top node in the CS tree associated with that capability. The CS Priority for the top node (e.g., for C1, a CS Priority of 154 in the Fig. 5A example) may be used to determine whether the corresponding CPU core is enabled and has the necessary resources to start a new job. Furthermore, the CS Priority and tree structure ensure that if the top node is disabled or lacks resources, then no node is both enabled and has the necessary resources; the operating system then may be informed that no core is currently available without further checks. The CS Priority of the top node also indicates whether the job currently executing on the top core is preemptible or whether the core is idle. Furthermore, the CS Priority and tree structure ensure that no job currently executing on any core that is enabled and with resources has a lower preemption threshold than the job executing on the top core, or is idle if that core is not idle. Suppose the top core is not idle and the preemption threshold is not lower than the priority of the new job to be started. In that case, the operating system may be informed that no core is currently available without further checks. Suppose that core C1 is enabled and has the necessary remaining resources to allow a new job begin, and that the job currently executing on core C1 has a lower preemption threshold than the job priority of the job to be started then the operating system may be informed that core C1 is selected for the new job, the information on core C1 may be updated and a new CS Priority for C1 may be calculated that may take into account the remaining core resources after start of the new job and take into account also the preemption threshold of the new job. This new CS Priority for core C1, say 145, is always lower than the previous CS Priority for core C1 (in this case, 154), and once assigned to C1, it requires reorganizing the CS tree to preserve the parent-child relationship. This requires following the branch of the tree with the highest CS Priority child in each case, and swapping the positions of the cores when the child has a higher CS Priority than the parent. The process stops once a child has reached a CS Priority level that is the same as or lower than its parent's. This reorganization cannot require more swaps than the number of levels in the tree below the top node; for example, with 12 cores, a maximum of 3 swaps is required.

FIG. 5B illustrates a CS tree including CS Priorities after a new job has started, according to an exemplary embodiment. FIG. 5B illustrates the reorganized CS tree structure that results when a new job that results in a new CS Priority of 145 for core C1 is to be put into execution on core C1. The CS tree may be restructured to maintain the property that no child core has a higher CS Priority than its parent core; in this case, only one core position swap is required.

The CS tree shown in FIG. 5B has twelve cores (e.g., C1 through C12) as in the previous state (e.g., as shown and described in FIG. 5A), but with modified positions reflecting the swap operation. At the top of the reorganized tree, core C2(148) is now positioned, which was swapped with C1 to maintain the tree's structural integrity. Core C2

(148) retains its CS Priority value of 148, which now represents the highest CS Priority among all cores in the tree following the assignment of the new job to C1. The cores C1

(145) and C3 (130) are positioned as child cores below C2 (148) at the second level. Core C1

(145) now displays a CS Priority value of 145, reflecting the update from 154 to match the remaining resources of Core C1 and the preemption threshold of the new job, as well as other factors. Core C3 (130) maintains its CS Priority value of 130 unchanged from the previous state. The positioning of C1 (145) as a child of C2 (148) demonstrates that C1's new CS Priority value of 145 is lower than C2's value of 148, thereby preserving the CS tree property.

At the third level of the CS tree, the core arrangement remains consistent with the previous state. Cores C4 (135) and C5 (140) are positioned as children of C1 (145), which was swapped with the parent during the swap operation. Core C4 (135) maintains its CS Priority value of 135, and core C5 (140) maintains its CS Priority value of 140. Both values remain less than their new parent C1's value of 145. Cores C6 and C7 remain positioned as children of C3 (130), with the CS Priority values that continue to be 100, which is indicated by the absence of explicit values. The bottom level of the CS tree maintains the same core arrangements as before the swap. Cores C8 and C9 remain as children of C4 (135), cores C10 and C11 remain as children of C5 (140), and core C12 remains as a child of C6.

The transformation or transition from the previous tree state of FIG. 5A to the state shown in FIG. 5B illustrates that C1 was selected for execution of a new job, resulting in the CS Priority of C1 being reduced to 145. The swap operation between C1 and C2 represents the minimum reorganization required to maintain the tree's structural properties after C1's CS Priority was updated from 154 to 145. This single swap operation represents the efficiency of the CS tree mechanism, as only one positional exchange was needed to restore the proper ordering despite the significant change in C1's CS Priority value. C2 (148) at the top has children C1 (145) and C3 (130), both of which have lower values. C1 (145) has children C4 (135) and C5 (140), both of whom have lower values. C3 (130) has children C6 and C7, both of whom have a value of 100. This property extends through all levels of the CS tree, thereby maintaining the structure that enables efficient core selection.

In operation, the CS tree shown in FIG. 5B represents the state immediately after the core selector module has processed a job request. The operating system may share job information with the core selector module, which uses the job's preemption threshold to calculate a new CS Priority for C1 (in this case, 145), with C1 being selected. The comparison of the new C1 (145) with its children revealed that C2 (148) had a higher CS Priority than C1's other child, C3 (139), triggering the swap operation involving C2. After the swap, both children of the new C1 (145) position, C4 (135) and C5 (140), had lower CS Priority values than their parent, so no further reorganization was required. This single swap operation, completed in constant time, demonstrates how the CS tree mechanism maintains its efficiency when core CS Priorities change, requiring at most the integer part of log₂(12) = 3 swap operations for a 12-core system; in this case, it is completed with just one operation.

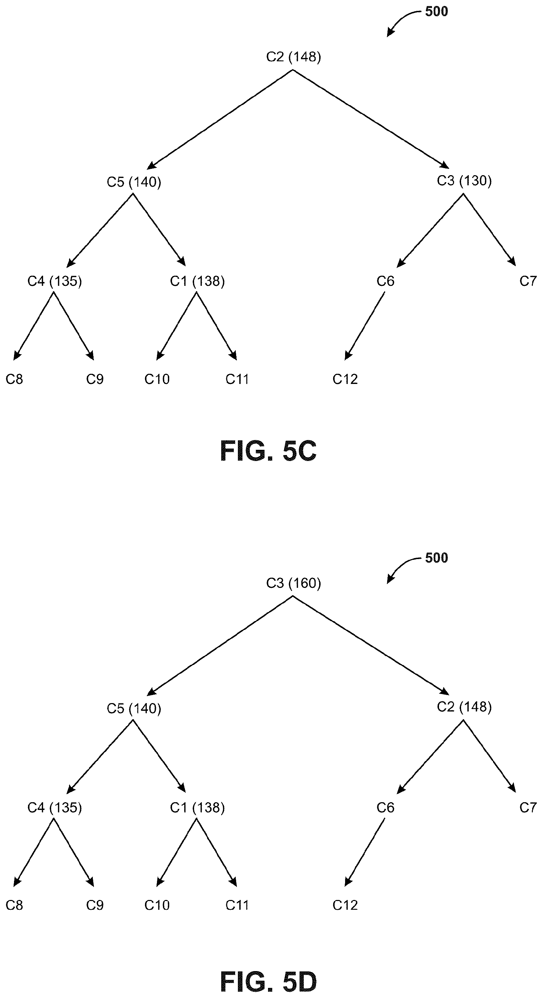

FIG. 5C illustrates a CS tree showing CS Priorities after two swap operations, according to an exemplary embodiment. FIG. 5C illustrates the final tree configuration, where the process begins with the configuration shown in FIG. 5A a job is to be started that results in C1 acquiring a CS Priority of 138. This results in C1(138) needing to be swapped with C2(148), but as C5(140) has a higher CS Priority than C1(138), a further swap of C1 and C5 is required. As both of the children nodes at the new position of C1 have CS Priorities lower than that of C1 (138) (both with CS Priority 100), no further swap is required to maintain the tree's structural integrity.

The CS tree shown in FIG. 5C includes twelve cores labeled C1 through C12, arranged in a balanced binary tree structure after the completion of two swap operations. At the top position of the reorganized tree, the core C2 (148) may be positioned with a CS Priority value of 148, now acting as the parent to a different pair of child cores than in FIG. 5B due to the second swap operation being needed. At the second level of the tree, cores C5 (140) and C3 (130) may be positioned as children of C2 (148). Core C5 (140), which was previously positioned at the third level as a child of C2, has been swapped upward and now occupies the position previously held by C2. Core C5 (140) maintains its CS Priority value of 140 throughout these operations. Core C3 (130) remains at the second level, with its CS Priority value unchanged at 130, and continues to serve as the right child of the top core.

The third level of the CS tree shows cores C4 (135) and C1 (138) positioned as children of C5 (140), along with cores C6 and C7 as children of C3 (130). Core C1 (138) has an updated CS Priority value of 138, reduced from its original value of 154 based on the core's remaining resources, the preemption threshold of the job being started, and possibly other factors such as power consumption. After the two swap operations, C1 (138) has moved from the top of the tree to the third level, positioned as a child of C5 (140). Core C4 (135) maintains its CS Priority value of 135 and is now paired with C1 as children of the same parent, though for core C4, this parent has changed from C2 to C5 through the reorganization process. At the bottom level of the tree, the core arrangements reflect the movements of their parent cores through the swap operations. Cores C8 and C9 remain positioned as children of C4 (135), cores C10 and C11 have moved with C1 (138) and remain as their children, and core C12 continues as a child of C6. All cores at this bottom level maintain their CS Priority values of 100.

The transformation or transitions to reach the state shown in FIG. 5C from the state shown in FIG. 5A may begin when a core is selected for a job with a preemption threshold that results in a CS Priority of 138 for that core. The selected core will be the top core C1 in FIG 5A with CS Priority 154; as a result of selection, its CS Priority may be updated to CS Priority 138. The first swap occurred between C1 (138) and C2 (148) because C2's CS Priority exceeded that of the updated C1. After this first swap, C1 (138) became a child of C2 (148), but the child C5(140) of the new C1 position had a CS Priority higher than C1(138), necessitating a second swap between C1(138) and C5(140). The resulting configuration shows C1 (138) positioned at the third level as a child of C5 (140). In an embodiment, each parent-child relationship may maintain the required property, for example, C2 (148) has children C5 (140) and C3(130), C5(140) has children C4 (135) and C1 (138), and C3 (130), C4(135) and C1(138) have children with CS Priorities of 100. The parent-child heap property extends throughout the entire tree.

In operation, the CS tree configuration shown in FIG. 5C illustrates the efficiency of the tree reorganization mechanism when processing job requests. The core selector module may receive a request to select a core for a specific job, directly identify the top tree core C1, check whether it is enabled and has the required resources, select it, and update its CS Priority from 154 to 138. The subsequent comparison operations identified that two swaps were required to maintain the heap property. For example, the first swap included C1 (138) with C2(148), followed by a second swap between C1(138) and C5(140). These two operations represent two-thirds of the maximum possible swaps (e.g., three) for a 12-core balanced tree, demonstrating that even with a significant CS Priority reduction, the CS tree may be efficiently reorganized with the number of operations needed bounded by the integer part of log₂(12). The final configuration maintains all required properties while positioning C1(138) in the CS tree hierarchy based on its updated CS Priority value, ensuring that the core at the head of the tree has the highest CS Priority. This makes the CS system ready for subsequent core selection requests from the operating system.

FIG. 5D illustrates a CS tree after a new job on C3 has been completed and the previous job on C3 has resumed, where the CS tree was as in FIG. 5C. FIG. 5D illustrates an exemplary state of the CS tree that was changed from the configuration shown in FIG. 5C, where the job executing on C3 has completed, and the previous job executing on C3 that was preempted was resumed with a resulting change in the CS Priority of C3 from 130 to 160. The CS tree may maintain a balanced binary tree organization with twelve cores labeled C1 through C12, but with reorganized positions that indicate the dynamic nature of job execution and completion in the multi-core system.

At the top position of the CS tree, core C3 (160) may be positioned with a CS Priority value of 160. This position for C3 represents a change from its previous position at the second level of the tree. The CS Priority value of 160 for C3 results from the job previously executing having completed, and a prior job having resumed execution, with the CS Priority of C3 being restored to its previous value. This resumption has elevated C3 to the highest CS Priority in the entire tree, necessitating its successive swaps with parent nodes until it reaches the top position.

The second level of the tree shows cores C5 (140) and C2 (148) positioned as children of core C3 (160). Core C5 (140) maintains its CS Priority value of 140 from the previous state, while core C2(148) maintains its CS Priority value of 148. The positioning of C2(148) as a child of C3(160) reverses the previous configuration, in which C2 occupied the top position. This arrangement illustrates that the CS Priority value determines a core's position, with C3's value of 160 exceeding C2's value of 148, thereby requiring C2 to be positioned as a child despite its previously dominant position. At the third level of the tree, cores C4 (135) and C1 (138) may be positioned as children of C5 (140), thereby maintaining their parent-child relationship from the previous configuration. Core C1 (138) continues to display its CS Priority value of 138, which was assigned when the current job 138 began execution on that core. Core C4 (135) maintains its CS Priority value at 135. Additionally, cores C6 and C7 may retain their positions, but now as children of C2, whose CS Priority is higher than that of C6 and C7, both of which continue to have CS Priorities of 100.

The bottom level of the CS tree maintains the same parent-child relationships for the leaf cores. Cores C8 and C9 remain as children of C4 (135), cores C10 and C11 are children of C1 (138), and core C12 remains as a child of C6. All cores at this level continue to have CS Priority values of 100, thereby preserving the property that no child has a CS Priority higher than its parent's throughout the tree. The transformation from the previous tree state shown in FIG. 3C to the configuration shown in FIG. 5D illustrates the dynamic nature of the CS tree as jobs complete execution and previous jobs resume on different cores. Completing a job on C3 and resuming a previous job with an associated CS Priority of 160 may require reorganizing the tree to position C3 (160) at the top. This reorganization may have involved multiple swaps to move C3 from its previous position to the top while maintaining the heap property throughout the CS tree. In an embodiment, the highest CS Priority value of 160 may be used to identify the preemption threshold of the job currently executing on C3 and to ensure that a new job to be put into execution must have a task priority greater than the preemption threshold associated with the C3(160) CS Priority, while requests to start jobs with job priorities that are not higher than the preemption threshold associated with the C3(160) CS Priority may receive an 'unavailable' response from the core selector module.

The CS tree shown in FIG. 5D represents the system state after job completion and resumption events have occurred, but before the job with CS Priority 138 on C1 has completed. The CS tree maintains its efficiency properties, including the fact that any single update requires at most the integer part of log₂(12) = 3 swap operations to restore the heap property. When the job on C1 with CS Priority 138 subsequently completes, the core selector module may retrieve C1's previous CS Priority value from CS data, update C1 to that value, and perform the necessary swaps to reposition C1 appropriately in the CS tree. The configuration shown in FIG. 5D may serve as the starting point for the job-completion sequence that follows, thereby illustrating how the CS tree adapts to ongoing changes in core states while maintaining its structural properties for efficient core selection.

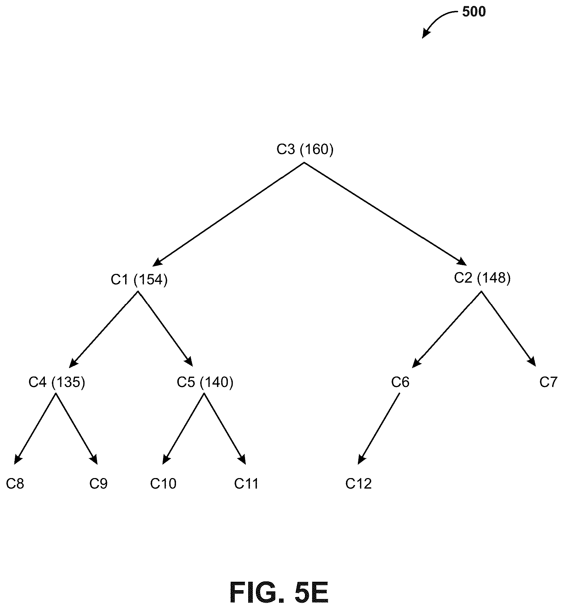

FIG. 5E illustrates a CS tree after a previous job on C1 resumes, when the state was as depicted in FIG. 5D, according to an exemplary embodiment. FIG. 5E illustrates an exemplary representation of the final state in the sequence of tree reorganizations, where the execution of the job that was executing on C1 has been completed, and C1 has been restored to its previous CS Priority value 154. The CS tree maintains its balanced binary structure with twelve cores labeled C1 through C12, reorganized to reflect C1's restoration to its original priority state.

At the top position of the CS tree, core C3 (160) may be positioned with its CS Priority value of 160, thereby maintaining its position from the previous tree state shown in FIG. 5D. The CS Priority value of 160 may represent the highest priority in the tree, indicating that C3 continues to execute the resumed job. The stability of C3's position at the top indicates that no other core has been given a CS Priority value exceeding 160 during the intervening operations. The second level of the tree shows cores C1 (154) and C2 (148) positioned as children of C3 (160). Core C1 (154) may be restored to its original CS Priority value of 154, an increase from the 138 assigned to C1 when it was preempted. This restoration of C1 (154) to a higher CS Priority value may have resulted in its movement from the third level back to the second level of the tree. Core C2 (148) maintains its CS Priority value of 148 and has remained at the second level of the CS tree, now a sibling of C1 (154), both serving as children of C3 (160).

At the third level of the tree, cores C4 (135) and C5 (140) may be positioned as children of C1 (154), while cores C6 and C7 may be positioned as children of C2 (148). The parent-child relationship between C1 and its children, C4 (135) and C5 (140), has been restored, with C1's elevated CS Priority of 154 properly exceeding those of both C4 (135) and C5 (140). Cores C6 and C7 continue to have CS Priority values of 100, maintaining their positions as children of C2 (148). The bottom level of the CS tree may retain the established parent-child relationships for all leaf cores. Cores C8 and C9 may be positioned as children of C4 (135), cores C10 and C11 remain positioned as children of C5 (140), and core C12 remains positioned as a child of C6. All cores at this bottom level maintain CS Priority values of 100, thereby satisfying the heap property requirement throughout the tree.

The transformation or transitions shown in FIG. 5D to FIG. 5E illustrates the reorganization sequence that occurs when a job is completed. Completing the job with CS Priority 138 on C1 may initiate a restoration process, in which the core selector module retrieves C1's previous CS Priority value of 154 from the CS data storage. Upon updating C1 from 138 to 154, the core selector module may determine that C1's new CS Priority exceeded that of its parent C5 (140), necessitating a swap operation. This single swap between C1 (154) and C5 (140) may restore the heap property, as C1's CS Priority of 154 did not exceed that of its new parent, C3, which had a CS Priority of 160. Restoring C1 to a higher position indicates the reversibility of the tree operations and the system's ability to maintain historical CS Priority information for cores.

The CS tree configuration shown in FIG. 5E may represent the completion of a full cycle of job assignments. The sequence began with C1 at the top of the tree with CS Priority 154 (e.g., as shown in FIG. 5A), proceeded through job assignment requiring tree reorganization (e.g., as shown in FIGs. 5B and 5C), may experience additional changes due to job completion (e.g., as shown in FIG. 5D), and from further job completion on C1 (e.g. as shown in FIG. 5E). The operating system's notification to the core selector module about job completion on C1 initiated the restoration process, which included retrieving C1's stored previous CS Priority from CS data, updating C1 to CS Priority 154, comparing with its current parent C5 (140), performing the necessary swap, and verifying that no further swaps were needed. This efficient restoration, requiring only one swap operation out of a maximum possible three for a 12-core tree, demonstrates the logarithmic time complexity of the CS tree operations. The final configuration maintains all cores in positions appropriate to their current CS Priority values, ready for subsequent core selection requests, and preserves the property that enables direct identification of the optimal core as the top of the tree.

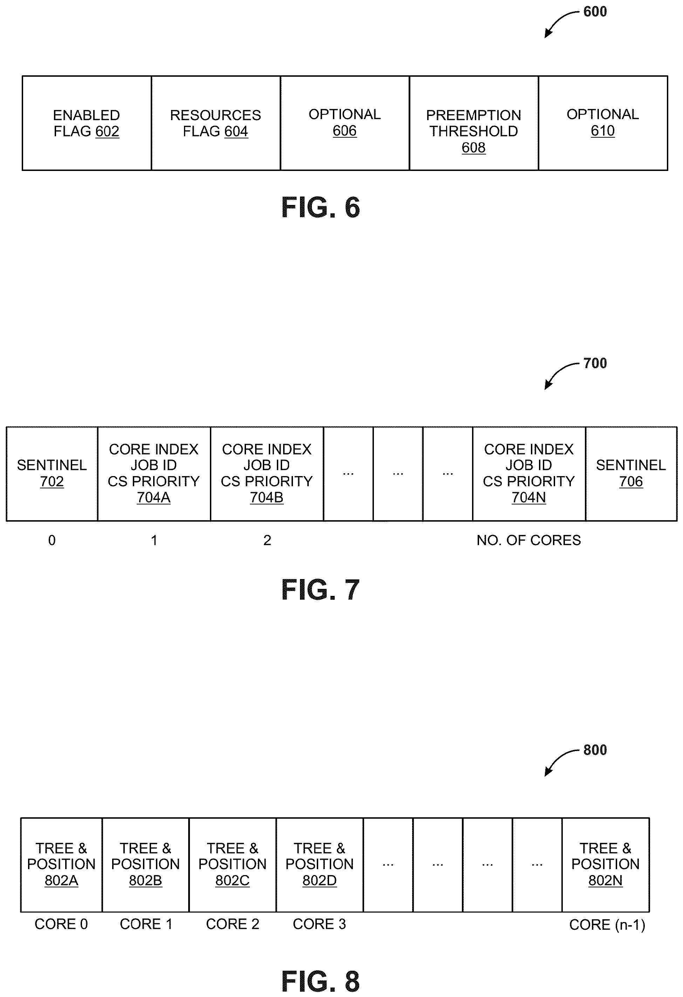

FIG. 6 illustrates the structure of the CS Priority value 600 associated with a CPU core. The highest bit in this integer value may be used as an 'ENABLED FLAG' 602 to indicate whether the core is currently enabled (1) or disabled (0). The next highest bit may be used as a 'RESOURCES FLAG' 604 to indicate whether the core has sufficient remaining resources to allow preemption (1) or does not have sufficient remaining resources (0). Lower order bits may be used as an indicator of the 'PREEMPTION THRESHOLD' 608 of the job currently in execution on the core or that the core is idle, with higher 'PREEMPTION THRESHOLD' values corresponding to lower job preemption threshold priorities and a maximum value corresponding to the core being currently idle. These factors are always included in the CS Priority. Depending on the system, other 'Optional' factors 606, 610 may be included, with their positions determining their relative importance compared to the 'PREEMPTION THRESHOLD' 608; such factors may include the remaining core resources, core power consumption, core temperature, or other core characteristics.

The CS Priority value 600 associated with each core ensures that all disabled cores and all cores that lack sufficient resources to allow preemption have lower CS Priority values than all cores that might be used to commence execution of a new job. The structure of the CS Priority 600 also ensures that cores with higher CS Priority values are either idle or executing jobs of lesser importance, as indicated by their pre-emption thresholds set to lower task priorities, resulting in the optimal core to select in the absence of other factors being the core with the highest CS Priority.

The CS Priority value structure 600 allows additional 'OPTIONAL' factors 606, 610 to be included, enabling the inclusion of other core characteristics in determining a CS Priority for a core and allowing such characteristics to be taken into account in identifying the optimal core if desired.

The structure of the CS Priority value 600 allows the current enabled/disabled state of a core and its availability of the resources needed to allow pre-emption be immediately determined from the CS Priority of the core, and also allows immediate determination of the pre-emption threshold task priority associated with the job currently executing on the core, taking into account whether higher task priority values relate to higher task priority as in some systems and hence to lower CS Priority 'PREEMPTION THRESHOLD' 608 values or whether higher task priority values relate to lower task priority in which case they relate to higher 'PREEMPTION THRESHOLD' 608 values.

FIG. 7 illustrates a heap array data structure 700 that may be used to efficiently implement a balanced binary tree for selecting a core in a multi-core computer system, according to an exemplary embodiment. The data structure shown in FIG. 7 may include sentinel elements 702 and 706 at the beginning and end positions, with core information entries 704A, 704B, through 704N positioned between these sentinels. The total array size may be configured as the number of cores plus two, including the sentinel positions.

The heap array data structure 700 may be implemented as an array where position 0 contains a sentinel value 702 that may be used for boundary checking or other control purposes, positions 1 to 'No. of cores' each correspond to a particular position on a balanced binary tree, and the final position may contain a sentinel 706. The position of each core in the array changes dynamically as jobs start and end on a core in a way that corresponds to changes in position on a CS tree, and the information recorded in each position 704A, 704B, through 704N may include an identifier of the core in that position (Core Index), the identifier of the job currently executing on that core (Job ID), and the CS Priority currently associated with that core. The heap array 700 is organized so that the core at position N in the array never has a CS Priority lower than the cores at position 2N and 2N+1 when these indices do not exceed 'No. of cores'. The CS tree implemented in this way avoids the overheads associated with pointers or other techniques, allows the position of the parent of a core at position M where M is not equal to 1 be immediately identified as the integer part of M divided by 2, and allows the children of the node at position N be immediately identified as at 2N and 2N + 1 where these are less than 'No. of cores'.

The top position in the tree structure corresponds to heap array position 1, providing direct access to the core with the highest CS Priority without requiring additional comparisons. Each array position 704A, 704B, through 704N, from index 1 to the number of cores, may contain three data elements representing the state of a particular core in the system. For instance, the first element stored at each array position may be the CS core index, which corresponds to an internal identifier used by the core selector module to identify each core uniquely. The CS core index may differ from hardware core identifiers and may range from 0 to the number of cores minus 1. The CS core index enables the core selector module to maintain consistent internal references to cores regardless of their physical hardware identifiers or their current position in the heap structure.

The second element at each array position 704A, 704B, through 704N may be the Job ID, which identifies the job currently executing on the corresponding core or about to start execution on it. This Job ID may be provided by the operating system when available and stored as a numeric value for debugging and analysis. The third element at each array position may be the CS Priority value for the corresponding core. This value may be calculated by the core selector module based on multiple factors, including whether the core has sufficient remaining resources to allow preemption and the preemption threshold of the job currently executing on that core or about to start execution after core selection. Its CS Priority value determines a core's position in the heap structure and may be updated whenever jobs start or complete on the core; the core's position in the heap array may change.

The heap array data structure 700 is shown in FIG. 7 may be implemented based on the heap properties where a core at any position 'i' never has a CS Priority that is lower than the cores at positions 2i or 2i+1 when these positions fall in the range 1 to 'No. of cores'. This implementation ensures that the core with the highest CS Priority is always located at position 1 of the array, allowing direct identification of the most suitable core without searching the entire array. The heap property may be maintained through reorganization operations triggered by changes in CS Priority values. A sentinel element 706 may be positioned at the end of the array after the last core entry 704N. The trailing sentinel 706 may indicate boundary checking or control purposes, as the leading sentinel 702 helps ensure that array access operations remain in valid bounds during heap reorganization operations.

The data structure 700 shown in FIG. 7 may be operable to enable dynamic updates as the cores are selected for job execution and as the jobs are completed. When a core's CS Priority changes due to a job assignment or completion, the heap property may be restored via a series of swaps that cannot exceed log₂(number of cores), rounded down to the nearest integer. This logarithmic bound on reorganization operations enables efficient heap reorganization even in systems with a large number of cores.

FIG. 8 illustrates a position array 800 used in a core selector module to track the location of each core in a CS tree, according to an exemplary embodiment. The position array 800 may include a linear array data structure with a size equal to the number of cores in the multi-core computer system. Each array element corresponds to a specific core and may be indexed using the CS core index. The position array 800 may include entries for Core 0 802A through Core (n-1) 802N, where 'n' represents the total number of cores managed by the core selector module. Each entry in the position array 800 stores information labeled as "Tree & Position" (802A, 802B, 802C, 802D, ... 802N) that enables the determination of a core's current location in a CS tree structure. The array may be indexed directly using the CS core index, which ranges from 0 to (number_of_cores - 1), providing constant-time access to position information for any given core.

Each "Tree & Position" entry (802A, 802B, 802C, 802D, ... 802N) in the position array 800 may include distinct information. For example, the first component identifies which CS tree contains the corresponding core, as multiple CS trees may exist when subsets of cores have different capabilities or when multiple real-time operating systems are utilizing the same core selector module. The second component specifies the exact position of the core in the heap array corresponding to that CS tree. This dual-component storage mechanism enables the core selector module to manage cores across multiple tree structures while maintaining efficient access to position information.

The position array 800 may be dynamically updated whenever cores change their positions in their CS tree structure. When a core's CS Priority changes due to a job assignment or completion, and the core selector module performs swap operations to maintain the heap property, the position array for all affected cores may be updated to reflect their new positions. This synchronization between the CS tree heap array and the position array 800 ensures that position lookups remain accurate throughout system operation. The structure of the position array 800 enables bidirectional navigation between a core's identifier and its tree position. Given a CS core index, the core selector module may directly access the position array 800 at that index (802A for Core 0, 802B for Core 1, 802C for Core 2, 802D for Core 3, ... 802N for Core (n-1)) to retrieve the core's current tree's position information. When executing tree reorganization operations, the core selector module uses position information to locate a specific core in the tree and updates the position array 800 after any swaps. In an embodiment, the position array 800 may also support scenarios where multiple real-time operating systems share the same core selector module. Each operating system may allocate specific CS trees for the cores under its control, and the tree identifier in each position array entry (802A, 802B, 802C, 802D, ... 802N) indicates which operating system's tree contains that core. This arrangement enables efficient core management across multiple operating systems while maintaining isolation between their respective core allocations.

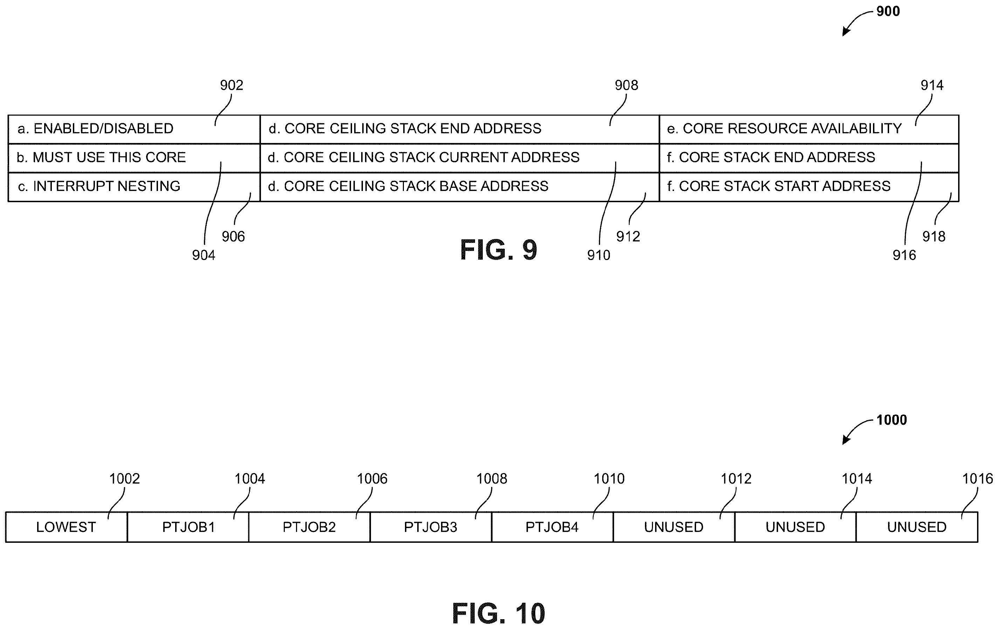

FIG. 9 illustrates a data structure that describes a core's information array 900, according to an exemplary embodiment. The core's information array 900 maintains detailed state and configuration data for each core in a multi-core computer system, which is managed by a core selector module. The cores' information array 900 may include multiple data fields including an "enabled/disabled" indicator 902 labeled as, for example, "a", a "must use this core" flag 904 labeled as, for example "b", an "interrupt nesting" counter 906 labeled as, for example, "c", "core ceiling stack addresses" labeled, for example, as "d" (e.g., including core ceiling stack base address 912, core ceiling stack current address 910, and core ceiling stack end address 908), a "core resource availability" indicator 914 labeled, for example, as "e", and "core stack addresses" labeled, for example, as "f" (comprising core stack end address 916 and core stack start address 918).

The cores' information array 900 may be sized to match the number of cores in the system and may be indexed using the CS core index, which uniquely identifies each core in the core selector module. Each entry in the cores' information array 900 holds information specific to a particular core, enabling the core selector module to maintain comprehensive state information for all cores under its management.

A core's enabled/disabled indicator 902 "a" may be implemented as a one-bit flag, where a value of 0 indicates that the core has been disabled and a value of 1 indicates that the core remains enabled. This flag may be utilized when the core selector module receives a request from a real-time operating system to take a core out of use or to restore a previously disabled core to use. When a core is marked as disabled through this flag its preemption threshold is set to a higher priority than that of any task in the system and the associated tree re-organized and the core selector module may not select that core for any further jobs that the real-time operating system may wish to start, even as the operating system terminates jobs currently running on the disabled core or allows them to run to completion with in each case the core selector module maintaining the core's high preemption threshold.

A core must use the core flag 904 "b", which may be set when affinity requirements dictate that a specific core must be used, preventing the system from switching to a less busy core. In an embodiment, this core flag 904 "b" may be implemented as a one-bit flag where a value of 0 indicates the core may be changed to another core and a value of 1 indicates that this core must remain the selected core even when a less busy core has become available for use before selection has taken effect. This flag may be used to prevent switching to a different core when initial core selection must account for the job's core affinity. Since different cores may have different hardware connectivity, a job may be restricted to using a specific core or one of a small number of cores if the job involves managing, controlling, or monitoring a hardware device with specific core connectivity, resulting in such jobs having specific core affinities that restrict the cores on which they may execute. When the core selector module selects a core suitable for a job, an interrupt may occur before the selection is applied, restarting the selection and unnecessarily repeating it if this flag is not set.

The interrupt nesting counter 906 "c" may be implemented as an integer value ranging from 0 to a hardware-dependent maximum (e.g., 15), indicating the current level of interrupt nesting on the core. Some operating systems may allow a core currently executing an exception or interrupt handler to be interrupted, with a higher-priority handler started, which in turn may be interrupted by an even higher-priority interrupt. More than ten levels of interrupt nesting may be possible in certain implementations. Each time a handler starts on a core, the interrupt nesting value may be incremented, and subsequently decremented when the handler completes. Handlers at any level may issue requests to an operating system to start a task, and the operating system may defer core selection until after all handlers have completed, or the core selector module may wait until the system has returned to normal execution mode, as indicated by the nesting level value for the core having returned to 0.

The core ceiling stack addresses "d" may include three related memory addresses: the core ceiling stack base address 912, the core ceiling stack current address 910, and the core ceiling stack end address 908. These addresses may define the bounds of the memory area reserved for each core's priority ceiling stack and track the address of the current entry. Task jobs on any core may begin execution and may be preempted by a higher-priority job, which may in turn be preempted by an even higher-priority job, continuing in this manner through multiple levels. The highest-priority job is completed, followed by the next lower-priority job, until all jobs have been completed. The job commencement and completion thus follow a last-in, first-out (LIFO) pattern, and current settings for a core may be stored on a stack when a job starts and restored from the stack when a job completes. The size of this stack is set to allow for the maximum number of nested pre-emptions on a core expected in a system.

When the core selector module selects a core for use with a job, the module may first increment the core ceiling stack current address 910 and then store the preemption threshold of the new job at that address, effectively pushing the threshold value onto the stack. The space on the stack may be available to permit this operation, as the core selector module may check that the current address does not equal the stack end address before the selection. Suppose the current address was equal to the stack end address 908. In that case, the CS resource availability indicator may indicate that resources are unavailable, and the core selector module may not have selected that core as a result. The value at the stack current address 910 represents the core's current preemption ceiling. After a job completes on a core, the core selector module may decrement the core's stack current address 910, which now points to the preemption threshold of the previous job being resumed. The value at the stack base address 912 may be set to the lowest possible priority, corresponding to the core being in idle or sleep mode with no job executing, and may be set lower than any job's priority.

The core resource availability indicator 914 "e" may indicate whether the remaining resources available for a core are sufficient to allow preemption. Depending on the operating system being utilized, the core selector module may need to issue a query to the operating system to determine resource availability, or it may be able to determine this information without such a query. An additional factor in resource availability determination may be the space remaining on the core ceiling stack. If the ceiling stack has become full, the resource availability indicator may be set to false. In systems where cores have different power consumption characteristics, this information may be included in the CS Priority and used in the resource availability calculation to give preference to cores with lower power consumption. Depending on the system, other factors such as core clock speed or core temperature may also be included. The core resource availability indicator 914 may be used in conjunction with the job-to-be-started's preemption threshold to calculate a new CS Priority for the core before the core selector module reorganizes the CS tree.

The core stack addresses "f' may include the core stack end address 916 and the core stack start address 918. Whether the core selector module utilizes these addresses may depend on the type of operating system. In some operating systems, each core may be provided with a system stack area in memory, following approaches such as the stack resource policy. In other operating systems, each task, job, or thread is allocated its own system stack. In systems where each core has a system stack, the core selector module may check the core's system stack to determine if sufficient space remains after a job begins execution to allow that job to be preempted. If insufficient space remains, the core selector module may set the core's resource availability to false, reset the core's CS Priority, and reorganize the CS tree accordingly. In operating systems where each task job or thread has its own stack, these core stack address fields may be unused by the core selector module, as the operating system manages the stacks associated with different threads and may only use the core selector module if sufficient space remains on the relevant stacks or may enable the core selector module to check with the operating system regarding resource availability.

The must-use core flag 904 may be set when a specific core must be used, preventing the system from switching to a less-busy core. Upon job completion, the core selector module may use the ceiling stack addresses to restore a core's preemption threshold to that of the previous job and update the core's resource availability indicator 914 based on the resources freed. The cores' information array 900 thus provides the detailed per-core information required for the core selector module to maintain optimal performance across all cores while respecting system constraints and ensuring reliable operation.

FIG. 10 illustrates a data structure for storing preemption thresholds of jobs, according to an exemplary embodiment. The data structure includes a core's ceiling stack 1000 for storing preemption thresholds of jobs at various stages of execution on a single core in a multi-core computer system. The core's ceiling stack 1000 may include storage locations for multiple preemption threshold values, including a lowest priority threshold entry 1002 labeled "Lowest PT", job-specific threshold entries labeled "Job1 PT" 1004, "Job2 PT" 1006, "Job3 PT" 1008, and "Job4 PT" 1010, followed by additional entries 1012, 1014, 1016 marked as "Unused".

The core's ceiling stack 1000 may be allocated for each core managed by the core selector module, with the size of each stack determined by the application requirements. The stack structure follows a last-in, first-out (LIFO) organization, which corresponds to the pattern of job preemption and resumption on a core. When a higher-priority job preempts a currently executing job, the new job's preemption threshold may be pushed onto the stack. When that job is completed, its threshold may be popped from the stack, revealing the threshold of the previously preempted job, which may then resume execution.

The "Lowest PT" entry 1002 at the base of the core's ceiling stack 1000 represents a preemption threshold value that may be set to a lower priority than any task, which may occur when the core is in an idle or sleep state with no job executing. This base value may be configured to be lower than any actual job priority, ensuring that any job submitted for execution may have a higher priority than the preemption threshold associated with an idle core. The core selector module may reference this base value when the stack current address points to the stack base address, indicating that no jobs are currently active on the core.

The job-specific preemption threshold entries 1004, 1006, 1008, 1010 represent the preemption thresholds of jobs that have been started on the core and may be at various stages of execution or suspension. The ordering of these entries reflects the sequence in which jobs were assigned to the core, with "PTJob1" 1004 being the first job started after the idle state, "PTJob2" 1006 representing a job that pre-empted Job1, "PTJob3" 1008 representing a job that pre-empted Job2, and "PTJob4" 1010 representing the most recently started job that preempted Job3. The value at the current priority stack pointer position represents the core's active preemption threshold, determining which priority levels may preempt the currently executing job.

The "Unused" entries 1012, 1014, 1016 in the core's ceiling stack 1000 may represent available space for additional job preemption thresholds. The number of unused entries determines how many more levels of preemption may occur on the core before the priority stack becomes full. The core selector module may execute operations to monitor the availability of unused entries by comparing the current stack address with its end address. When no unused entries remain, the core's resource availability indicator may be set to false, preventing the core selector module from selecting that core for additional jobs until some jobs are complete and stack space becomes available.

The depth of the core's ceiling stack 1000 may be specified by the application developer based on the expected maximum number of jobs that may be simultaneously active on a single core. A typical implementation may allocate space for eight entries per ceiling stack. However, the actual requirement depends on the application's preemption patterns and priority structure. The stack depth directly determines the maximum number of jobs that may be at various stages of execution on the core at the same time, with only the highest-priority job executing while others remain suspended.

The core's ceiling stack 1000 may be implemented with defined base, current, and end addresses stored in the core's information array. The base address points to the location of the "Lowest PT" entry 1002, the end address points to the memory location immediately after the last available stack position, and the current address points to the threshold value of the currently executing job. These addresses enable the core selector module to efficiently manage stack operations while maintaining bounds checking to prevent stack overflow.

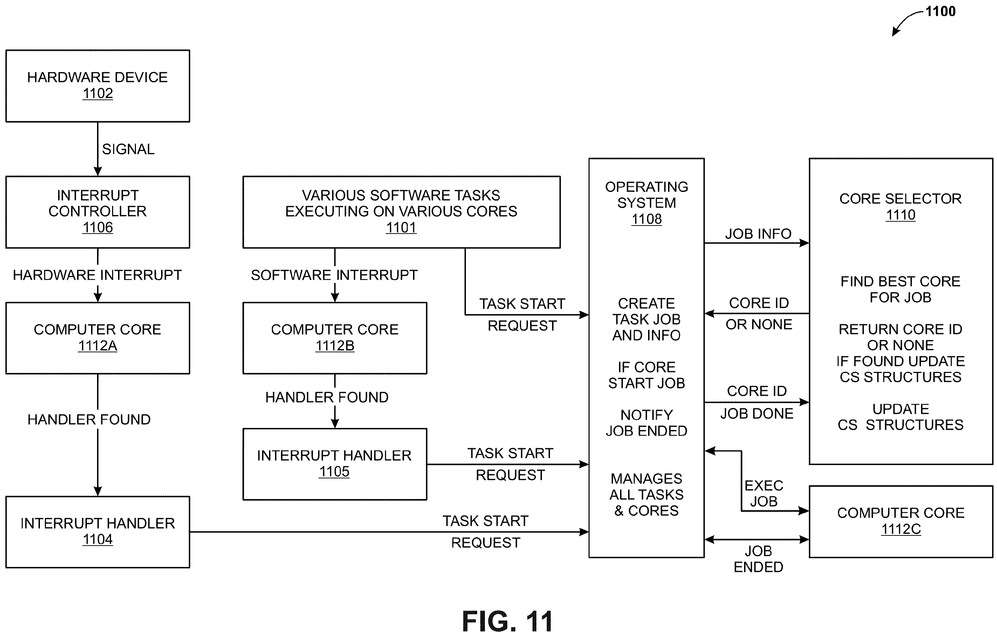

FIG. 11 illustrates a system 1100 for selecting central processing unit cores in a multi-core computer system, according to an exemplary embodiment. FIG. 11 is described in conjunction with FIGs. 1-10. The system 1100, as shown in FIG. 11, includes a hardware device 1102, an interrupt controller 1106, interrupt handlers 1104 and 1105, a plurality of computer cores 1112A, 1112B, and 1112C, an operating system 1108, and a core selector 1110. The plurality of computer cores 1112A, 1112B, and 1112C may concurrently execute various software tasks 1101, each with a respective plurality of execution states. The hardware device 1102 may be operatively coupled to the interrupt controller 1106 through a signal connection. The interrupt controller 1106 may be configured to receive signals from the hardware device 1102 and generate hardware interrupts that may be directed to one or more of the computer cores 1112A, 1112B, and 1112C. The interrupt handler 1104 may be associated with the interrupt controller 1106 and configured to execute on the computer core 1112A when a hardware interrupt is received. The interrupt handler 1105 may be configured to execute on the computer core 1112B when a software interrupt may be generated by tasks executing on the various cores. The operating system 1108 may be operatively coupled to the core selector 1110, the interrupt handlers 1104 and 1105, and the plurality of computer cores 1112A, 1112B, and 1112C. The core selector 1110 may be operatively coupled to the operating system 1108 and may be configured to maintain internal data structures that organize the plurality of computer cores 1112A, 1112B, and 1112C.

The hardware device 1102 may represent any peripheral component that may generate signals requiring processing by the computer system 1100. When the hardware device 1102 generates a signal, it may transmit the signal to the interrupt controller 1106. The interrupt controller 1106 may process the signal and generate a corresponding hardware interrupt, which may be directed to a specific computer core among the plurality of computer cores 1112A, 1112B, and 1112C. Upon receiving the hardware interrupt, the computer core 1112A may suspend execution of any currently executing software task and may begin executing the interrupt handler 1104 in a privileged execution mode. The interrupt handler 1104 may be configured to process the hardware interrupt and generate a task start request, which may be transmitted to the operating system 1108. Similarly, the interrupt handler 1105 may be executed on the computer core 1112B in response to a software interrupt and may also generate task start requests, which can be transmitted to the operating system 1108.

The operating system 1108 may be configured to receive task start requests from the interrupt handlers 1104 and 1105, as well as from software tasks executing on the various cores. Upon receiving a task start request, the operating system 1108 may create a task job and associated job information. The job information may include a job identifier, a priority value, a pre-emption threshold, capability requirements, and affinity constraints. The operating system 1108 may transmit the job information to the core selector 1110 through a communication interface, thereby implementing the step of receiving, from the operating system 1108, a request to select a CPU core from amongst the plurality of CPU cores 1112A, 1112B, and 1112C for use in executing a specific software task.

The core selector 1110 may maintain a dynamic hierarchical tree-based structure that organizes the plurality of computer cores 1112A, 1112B, and 1112C according to their current suitability for executing new software tasks. The dynamic hierarchical tree-based structure may change as the execution states of the plurality of software tasks executing on the plurality of computer cores 1112A, 1112B, and 1112C change. Each computer core (1112A, 1112B, and 1112C) may be assigned a core selector priority value based on the current remaining resources available on the core, the preemption threshold of any job currently executing on the core, and other factors such as power consumption characteristics or thermal properties. The dynamic hierarchical tree-based structure may be organized such that a currently optimal core is located at a predetermined position within the tree-based structure, where the predetermined position is preferably the head position of the tree-based structure.

The core selector 1110 may be configured to identify the optimal core for a job by analyzing the dynamic hierarchical tree-based structure. When the operating system 1108 transmits job information to the core selector 1110, the core selector 1110 may calculate a core selector priority value for the incoming job based on the job's priority, preemption threshold, capability requirements, and affinity constraints. The core selector 1110 may then compare this calculated priority value with the core selector priority value of the core located at the predetermined position of the tree-based structure. Suppose no specific core affinity may be specified in the job information. In that case, the core selector 1110 may examine the core at the predetermined position, which may represent the currently optimal core among all available cores. If a core affinity is specified, the core selector 1110 may use internal position data to immediately identify the positions of the specified affinity core or cores within the dynamic hierarchical tree-based structure and may then examine those cores.

The core selector 1110 may determine whether the currently optimal core has sufficient remaining resources to allow the new job to begin execution, and whether the preemption threshold of any job currently executing on that core is lower in priority than the new job's priority. If both conditions are satisfied, the core selector 1110 may select the core and return a core identifier (core ID) to the operating system 1108. If either condition is not satisfied, the core selector 1110 may return an indication to the operating system 1108 that no core is available (none). When a core may be selected, the core selector 1110 may update its internal data structures, which may include updating the core selector priority value of the selected core based on the new job's pre-emption threshold and the reduced remaining resources, and may reorganize the dynamic hierarchical tree-based structure to maintain the property that the currently optimal core may always be located at the predetermined position.

Upon receiving a core identifier from the core selector 1110, the operating system 1108 may initiate execution of the job on the selected core. If the selected core may be the computer core 1112C, the operating system 1108 may direct that the job begin execution on the computer core 1112C. The operating system 1108 may pre-empt any currently executing job on the computer core 1112C if the new job has a higher priority or may allow the new job to begin immediately if the computer core 1112C is idle. During execution of the job on the computer core 1112C, the core selector 1110 may maintain updated information about the execution state of that core within its internal data structures.

When a job may complete execution on any of the computer cores 1112A, 1112B, or 1112C, the operating system 1108 may transmit a notification to the core selector 1110 indicating that the job has ended. The notification may include the core identifier of the core on which the job was completed. Upon receiving this notification, the core selector 1110 may update its internal data structures by restoring the core selector priority value of the identified core to its previous value, which may correspond to the execution state before the job was completed. The core selector 1110 may then reorganize the dynamic hierarchical tree-based structure to reflect the updated core selector priority value, thereby ensuring that the currently optimal core remains in its predetermined position within the tree-based structure.

The dynamic hierarchical tree-based structure maintained by the core selector 1110 may be implemented as a balanced binary tree, where each core may have at most two child cores, and the core selector priority value of any parent core is greater than or equal to the core selector priority values of its child cores. The reorganization of the tree-based structure may be performed through a series of swap operations, in which a core whose priority value has changed may be moved upward or downward in the tree by exchanging positions with its parent or child cores as needed to restore the heap property. The number of swap operations required to reorganize the tree-based structure after a core selection or job completion may be proportional to no more than the logarithm, base two, of the number of cores, rounded down to the nearest integer.

The core selector 1110 may maintain multiple internal data structures to enable rapid core selection. A first data structure may be a heap-array implementation of a dynamic hierarchical tree, where each array entry may contain a core index, a job identifier, and a core selector priority value. A second data structure may be a position array that allows the position of any core within the heap array to be determined immediately from its index. A third data structure may be a core's information array that stores, for each core, flags indicating whether the core is enabled or disabled, whether the core must be used for affinity reasons, the interrupt nesting level, stack addresses for managing preemption, and resource availability indicators. Each computer core (1112A, 1112B, and 1112C) may also be associated with a ceiling stack that stores the pre-emption thresholds of jobs currently suspended on that core, with the top of the stack representing the pre-emption threshold of the currently executing job.

When the operating system 1108 may request core selection for a job that requires a specific capability type, the core selector 1110 may maintain separate dynamic hierarchical tree-based structures for each capability type. Each tree-based structure may correspond to a respective subset of the plurality of computer cores 1112A, 1112B, and 1112C, where each core in a subset may have a specific capability type. The core selector 1110 may decode the capability requirement from the job information and may select the appropriate tree-based structure corresponding to that capability type. The core selector 1110 may then identify the currently optimal core within that tree-based structure and return either the core identifier of that core or an indication that no core is available.

The core selector 1110 may calculate the core selector priority(CS) value for each core, giving precedence to resource availability. Cores that may lack sufficient remaining resources to allow pre-emption may be assigned lower core selector priority values than cores that may have adequate resources, regardless of the pre-emption thresholds of jobs executing on those cores. Among cores with sufficient resources, cores executing jobs with lower pre-emption thresholds may be assigned higher core selector priority values than cores executing jobs with higher pre-emption thresholds. The core selector priority value may also incorporate additional factors, such as power consumption characteristics (where cores with lower power consumption may be given preference when other factors are equal) or thermal characteristics (where cooler cores may be preferred).

The operating system 1108 may manage all tasks and cores in the system 1100 and may maintain awareness of which tasks may be waiting to execute and which cores may be available. The operating system 1108 may create task jobs and job information structures when task start requests are received from interrupt handlers 1104 and 1105 or from other software tasks. The job information may include all parameters needed by the core selector 1110 to make an optimal core selection decision, including the job's priority level which may indicate the urgency or importance of the task, the pre-emption threshold which may restrict which other tasks may interrupt this job during execution, capability requirements which may specify hardware features needed by the job, and affinity constraints which may restrict the job to execution on specific cores or sets of cores.

The system 1100 may operate in a time-critical environment where delays in starting high-priority tasks may have significant consequences. The core selector 1110 may provide rapid core selection by maintaining a dynamic hierarchical tree-based structure, ensuring that the optimal core is always immediately accessible at the predetermined position without requiring examination of all cores. When a job with a new priority and pre-emption threshold may need to start, the core selector 1110 may examine only the single core at the predetermined position in the tree-based structure or examine a small number of cores if affinity constraints apply, and may immediately determine whether any core is available. The time required for this determination may be constant regardless of the total number of cores in the system 1100, providing significant performance advantages in systems with large numbers of cores.

When a core may be selected and a job may begin execution, the core selector 1110 may update the selected core's data by storing its previous state, calculating a new core selector priority value based on the new job's pre-emption threshold and the reduced remaining resources, and updating the core's entry in the heap array. The core selector 1110 may then reorganize the dynamic hierarchical tree-based structure by comparing the new core selector priority value with the core selector priority values of child cores and performing swap operations as needed to move the core downward in the tree until the heap property may be restored. Each swap operation may exchange the positions and data of a parent core and a child core in the heap array and may update the corresponding entries in the position array.

When a job may complete and the operating system 1108 may notify the core selector 1110, the core selector 1110 may retrieve the stored previous state of the core from its internal data structures and may restore the core's core selector priority value to that previous value. The core selector 1110 may then reorganize the dynamic hierarchical tree-based structure by comparing the restored core selector priority value with the core selector priority value of the core's current parent in the tree and performing swaps as needed to move the core upward in the tree until the heap property is restored. The maximum number of swap operations required may equal the tree's depth, which grows logarithmically with the number of cores.

The various software tasks 1101 executing on the various cores may represent independent units of work with different priority levels and execution requirements. Each software task may correspond to a specific function to be performed by the computer system 1100, and multiple execution instances, or jobs, of the same task may run simultaneously. Each job may pass through various execution states, including waiting to start, executing on a core, suspended due to preemption by a higher-priority job, and completed. The execution states of the plurality of software tasks may continuously change as jobs start, execute, are pre-empted, resume, and complete, causing corresponding changes in the execution states of the plurality of computer cores 1112A, 1112B, and 1112C.

The dynamic hierarchical tree-based structure maintained by the core selector 1110 may change in response to changes in the execution states of the plurality of software tasks executing on the plurality of computer cores 1112A, 1112B, and 1112C. When a new job starts on a core, the core's execution state may change from executing a job with one preemption threshold to executing a job with a different preemption threshold, and the core's available resources may decrease. When a job may complete, the core's execution state may revert to executing a previously suspended job with its associated preemption threshold, and the core's available resources may increase. Each such change in execution state may trigger a recalculation of the affected core's core selector priority value and a reorganization of the dynamic hierarchical tree-based structure to maintain the property that the currently optimal core may be located at the predetermined position.

In an embodiment, the core selector 1110 may be configured to perform atomic operations when updating its internal data structures, thereby preventing data corruption that can occur when multiple cores simultaneously attempt to access or modify the core selector's data. The core selector 1110 may use hardware-provided atomic operations to implement guards that ensure exclusive access to critical data structures during updates. When the core selector 1110 may need to update the heap array, position array, or cores information array, the core selector 1110 may first atomically acquire a guard lock, perform all necessary updates, and then atomically release the guard lock, thereby ensuring that the data structures may remain consistent even when the operating system 1108 on multiple cores may simultaneously request core selection or notify job completion.

The operating system 1108 may interface with the core selector 1110 through a defined protocol, where the operating system 1108 may pass job information comprising the job identifier, priority, pre-emption threshold, capability requirements, and affinity constraints, and may receive in return either a core identifier or an indication that no core may be available. The operating system 1108 may use the returned core identifier to initiate job execution on the selected core and may later notify the core selector 1110 when the job completes by passing the core identifier on which the job executed. The operating system 1108 may also send control requests to the core selector 1110 to take specific cores out of use, restore cores to use, or modify core selector priority values for specific cores, enabling dynamic management of the set of cores available for task execution.

The computer cores 1112A, 1112B, and 1112C may each have associated hardware identifiers used by the operating system 1108 and the interrupt controller 1106, while the core selector 1110 may use internal core indices ranging from zero to the number of cores minus one. The core selector 1110 may maintain mapping functions that may convert between hardware core identifiers and internal core indices, allowing the core selector 1110 to use compact array-based data structures indexed by core index while interfacing with the operating system 1108 using hardware core identifiers. When the operating system 1108 passes a core identifier to the core selector 1110 in a job completion notification, the core selector 1110 may map the hardware identifier to the corresponding internal core index to locate the core's entry in the cores information array and its position in the dynamic hierarchical tree-based structure.

In operation, the system 1100 may select optimal cores to execute software tasks in a multi-core computer environment. The hardware device 1102 may generate signals that may be processed by the interrupt controller 1106 to generate hardware interrupts directed to specific computer cores among the plurality of computer cores 1112A, 1112B, and 1112C. The interrupt handlers 1104 and 1105 may execute on the computer cores 1112A and 1112B in response to hardware and software interrupts, generating task start requests that can be sent to the operating system 1108. The operating system 1108 may receive task start requests from interrupt handlers 1104 and 1105, as well as from executing software tasks. It may then create job information for each task to be started and request the core selector 1110 to select an optimal core for executing the job. The core selector 1110 may maintain a dynamic, hierarchical tree-based structure that organizes the plurality of computer cores 1112A, 1112B, and 1112C according to their current suitability for executing new jobs. This structure may change dynamically as the execution states of software tasks executing on the cores change. The core selector 1110 may identify the currently optimal core by examining the core located at the predetermined position in the tree-based structure, determine whether that core is suitable for the requested job, and return either the core identifier or an indication that no core is available to the operating system 1108. When a core is selected, the core selector 1110 updates the selected core's core selector priority value and reorganizes the dynamic hierarchical tree-based structure in a time proportional to the logarithm of the number of cores. The operating system 1108 may use the returned core identifier to start the job executing on the selected core, which may be computer core 1112C. It may later notify core selector 1110 when the job completes, triggering another update and reorganization of the dynamic hierarchical tree-based structure. The system 1100 may thereby provide rapid and efficient core selection, minimizing the time required to start high-priority jobs while optimally distributing job execution across the available cores 1112A, 1112B, and 1112C to maximize overall system performance.

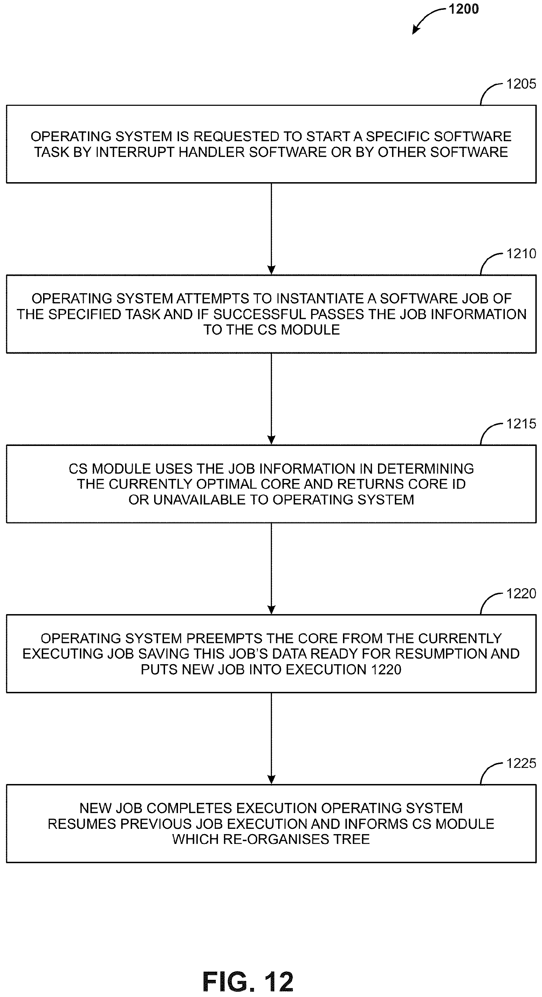

FIG. 12 illustrates a flow diagram including a method 1200 for selecting and managing CPU cores in a multi-core computer system, according to an exemplary embodiment. FIG. 12 is described in conjunction with FIGs. 1-11. At step 1205, the operating system 1108 (as shown in FIG. 11) may request that a specific software task be initiated. The request may originate from interrupt handler software 1104 or 1105 (shown in FIG. 11) following a hardware interrupt from hardware device 1102 through interrupt controller 1106, or the request may originate from other software tasks already executing on computer cores 1112A, 1112B, or 1112C (shown in FIG. 11). In a hardware implementation, the request may be processed by the operating system executing on one of the CPU cores, where the CPU reads the task start request from memory and prepares to create a new job instance. The interrupt handler software or other software may write the task start request to a designated memory location or queue that the operating system monitors, and the CPU executing the operating system code may then read this request from memory.

At step 1210, the operating system 1108 (shown in FIG. 11) may attempt to instantiate a software job of the specified task. If the instantiation is successful, the operating system 1108 may pass the job information to the core selector module 1110 (shown in FIG. 11). The job information may include parameters such as the job identifier, priority, threshold, capability requirements, and affinity restrictions. In a hardware implementation, the operating system executing on a CPU core may allocate memory for the new job data structures and populate these structures with the job parameters. The CPU may then invoke the core selector module 1110 by writing the job information to shared memory accessible by the core selector or by calling the core selector's interface functions. An ASIC or dedicated processor implementing the core selector functionality may read the job information from the shared memory location where the operating system stored it.

At step 1215, the core selector module 1110 (shown in FIG. 11) may use the job information in determining the currently optimal core from among computer cores 1112A, 1112B, and 1112C (shown in FIG. 11). The core selector module 1110 may return either a core identifier or an unavailable status to the operating system 1108. In a hardware implementation, the core selector module may be implemented as a specialized processor or ASIC that maintains tree-based data structures in dedicated memory. The processor may execute algorithms to traverse the tree structure stored in memory, comparing CS priority values at different tree nodes to identify the optimal core. The tree data may be stored in high-speed cache memory or dedicated SRAM for rapid access. The core selector processor may read the job's priority and capability requirements from memory, access the tree structure to identify candidate cores, and write the selected core identifier or unavailable status to a result register or memory location that the operating system may subsequently read.

At step 1220, the operating system 1108 (shown in FIG. 11) may preempt one of the computer cores 1112A, 1112B, or 1112C from the currently executing job. The preemption process may involve saving the current job's data for resumption later. The operating system 1108 may then execute the new job on the selected core. In a hardware implementation, the CPU executing the operating system code may save the processor state of the preempted job, such as register contents, program counter, and stack pointer, to a memory location associated with that job's context. The CPU may use direct memory access (DMA) controllers to transfer large blocks of context data to main memory efficiently. The operating system executing on the CPU may then load the new job's context from memory into the processor registers, update the program counter to point to the new job's entry point, and transfer control to the new job. Memory management units (MMUs) within the CPU may be reprogrammed to establish the correct virtual-to-physical address mappings for the new job's memory space.

At step 1225, after the new job completes execution on one of the computer cores 1112A, 1112B, or 1112C, the operating system 1108 (shown in FIG. 11) may resume the previous job's execution by restoring its saved context. The operating system 1108 may inform the core selector module 1110 that the job has completed, and the core selector module 1110 may reorganize the tree structure to reflect the system's new state. In a hardware implementation, the CPU executing the completed job may trigger an interrupt or system call to notify the operating system of job completion. The operating system executing on a CPU may read the saved context data for the previously preempted job from memory and restore it to the processor registers, program counter, and other state elements. The CPU may then notify the core selector module 1110 by writing a completion message to shared memory or invoking a core selector interface function. The core selector processor or ASIC may read the completion notification, update its internal data structures, including CS priority values and tree positions stored in memory, and perform tree reorganization operations by swapping entries in the heap array structure maintained in memory. The tree reorganization may involve reading and writing multiple memory locations to maintain the heap property, in which parent nodes have higher or equal CS priority values than their children.

An embodiment of the invention can also be realized as a computer program stored on a computer-readable storage medium, which, when executed on a computer system, performs the method steps as described above.

Disclosed is a method of selecting an optimal central processing unit (CPU) core for a computer system to use to execute a specific software task, where the computer system has a plurality of CPU cores. The method includes steps of: receiving, from an operating system, O/S, of the computer system, a request to select a CPU core from amongst the plurality of CPU cores for use in executing a specific software task; and selecting a CPU core from amongst the plurality of CPU cores for use in executing the specific software task, in response to the request from the O/S, and sending the selected CPU core identity to the O/S; the plurality of CPU cores may concurrently be executing a plurality of software tasks, each having a respective plurality of execution states, the plurality of CPU cores is organized in a dynamic hierarchical tree-based structure which dynamically changes as the execution states of the plurality of software tasks executing on the plurality of CPU cores change, such that at any one time, a currently optimal core is located at a predetermined position of the tree-based structure, and the selecting step takes into account a current state of the dynamic hierarchical tree-based structure by selecting the CPU core which is located at the predetermined position of the tree-based structure, and sending the identity of the selected CPU core which is located at the predetermined position to the O/S or notification that no core is currently available; the time required in completing selection of the optimal core from N cores being proportional to no more than log(N).

## Claims

1. A method of selecting a central processing unit (CPU) core for a computer system to use to execute a specific software task, wherein the computer system has a plurality of CPU cores, the method comprising steps of:
a) receiving, from an operating system, O/S, of the computer system, a request to select a CPU core from amongst the plurality of CPU cores, for use in executing a specific software task; and
b) selecting a CPU core from amongst the plurality of CPU cores for use in executing the specific software task, in response to the request from the O/S, and sending the selected CPU core identity or notification that no core is currently available to the O/S,
wherein the plurality of CPU cores is concurrently executing a plurality of software tasks, each having a respective plurality of execution states,
wherein the plurality of CPU cores is organized in a dynamic hierarchical tree-based structure which dynamically changes as the execution states of the plurality of software tasks executing on the plurality of CPU cores change, such that at any one time, a currently optimal core is located at a predetermined position of the tree-based structure, and
wherein the selecting step takes into account the current state of the dynamic hierarchical tree-based structure by selecting the CPU core located at the predetermined position in the tree-based structure and sending the identity of the selected CPU core to the O/S.

2. The method of claim 1, wherein the predetermined position of the tree-based structure is a position at a head of the tree-based structure.

3. The method of claim 2, wherein the hierarchical tree based structure organizes the plurality of CPU cores according to a core selector, CS, priority value, and assigns a CS priority value to each core based on respective current values of each core's capabilities, current state and remaining resources, and pre-emption restriction of the software task currently executing on the CPU core, and the CPU core with the currently highest CS priority value is stored at the head of the tree-based structure.

4. The method of claim 3, wherein the CPU core with the currently highest CS priority value that is stored at the head of the tree-based structure is selected at step (b).

5. The method of 1, wherein the O/S receives a request from a software interrupt handler of the computer system, the request being a request to start execution of the specific software task.

6. The method of claim 1, further including the step of:
receiving from the O/S a notification that the software task currently executing on the selected core has completed execution.

7. The method of claim 4, wherein the CS priority values and associated tree positions of the CPU cores in the hierarchical tree-structure are updated in a time period proportional to no more than the logarithm of the number of CPU cores.

8. The method of claim 1, wherein the selecting step (b) takes into account a current state of the dynamic hierarchical tree-based structure and recognizes that none of the plurality of CPU cores is available for the specific software task and sends a notification to the O/S of the same.

9. The method of claim 4, wherein a determination is made as to whether the CPU core with the currently highest CS priority value that is stored at the head of the tree-based structure corresponds to the specified task, and if it is determined that it is not corresponding to the specified task, a CPU core with the currently highest CS value from among the cores corresponding to the specified task is selected or, if no such CPU core which corresponds to the specified task is available for the specified task, no core is selected.

10. The method of claim 7, wherein the CS priority values and associated tree positions of the CPU cores in the hierarchical tree-structure are updated and are ready for reuse in a time period proportional to no more than the logarithm of the number of CPU cores.

11. The method of claim 1, wherein the plurality of CPU cores is organized in a plurality of dynamic hierarchical tree-based structures, each tree-based structure corresponding to a respective subset of the plurality of CPU cores.

12. The method of claim 11, wherein each tree-based structure of the plurality of tree-based structures corresponds to a respective subset of the plurality of CPU cores, each CPU core in a subset having a specific capability type.

13. A system comprising means adapted for carrying out all the steps of the method according to claim 1.

14. A computer program comprising instructions for carrying out all the steps of the method according to claim 1, when said computer program is executed on a computer system, the computer program being non-transitory and stored on a computer-readable storage medium.
